(19) **Europäisches Patentamt / European Patent Office / Office européen des brevets**

(11) **EP 4 106 417 A1**

(12) # EUROPEAN PATENT APPLICATION
published in accordance with Art. 153(4) EPC

(43) Date of publication:
**21.12.2022 Bulletin 2022/51**

(21) Application number: **21754396.6**

(22) Date of filing: **29.01.2021**

(51) International Patent Classification (IPC):
***H04W 52/02*** *(2009.01)*

(52) Cooperative Patent Classification (CPC):
**H04W 52/02; H04W 76/23; H04W 76/28;**
Y02D 30/70

(86) International application number:
**PCT/CN2021/074336**

(87) International publication number:
**WO 2021/159973 (19.08.2021 Gazette 2021/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.02.2020 CN 202010085307**

(71) Applicant: **Datang Mobile Communications Equipment Co., Ltd.**
**Beijing 100085 (CN)**

(72) Inventor: **ZHAO, Yali**
**Beijing 100083 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **DISCONTINUOUS RECEPTION PROCESSING METHOD, TERMINAL, DEVICE, AND MEDIUM**

(57) Embodiments of the present disclosure provide a discontinuous reception processing method, a terminal, a device, and a medium. The method includes determining sidelink DRX configuration corresponding to a specific target of the sidelink interface; wherein the specific target is a first combination of a sidelink interface source identity and a sidelink interface destination identity, or a second combination of the sidelink interface source identity, the sidelink interface destination identity and a cast type of the sidelink interface, receiving DRX configuration information corresponding to a specific target of a sidelink interface, and transmitting and/or receiving data according to the DRX configuration information.

determining DRX configuration of a sidelink interface corresponding to a specific target of the sidelink interface based on the specific target of the sidelink interface; the specific target is a first combination of a sidelink interface source address and a sidelink interface destination address or a second combination of the sidelink interface source address, the sidelink interface destination address and a transmission type of the sidelink interface. The transmission types refer to: unicast, multicast and broadcast; or unicast and multicast — 401

FIG. 4

**Description**

**CROSS-REFERENCE TO RELATED APPLICATION**

This application claims priority of the Chinese patent application No. 202010085307.1 filed on February 10, 2020, which is incorporated herein by reference in its entirety.

**TECHNICAL FIELD**

The present disclosure relates to the field of communications technology, in particular to a discontinuous reception processing method, terminal, device and medium.

**BACKGROUND**

In the cellular network communication in the related art, uplink/downlink data and control information are transmitted between the terminal and the network side device through the Uu interface. The following briefly describes the discontinuous reception (DRX) mechanism of the cellular communication system.

In a mobile communication system based on a shared channel, such as Long Term Evolution (LTE), the transmission of uplink and downlink data is controlled by a base station (eNB) scheduler. When the scheduler determines to schedule a user, the terminal is informed through the control channel on which resource to send or receive data. A terminal, such as a user equipment (UE) monitors the control channel, and when scheduling information of the terminal is detected, data transmission (uplink) or data reception (downlink) is implemented according to the instructions on the control channel. Under the active state, since the terminal is not sure when the eNB will schedule the terminal, a common working mode is that the terminal continuously monitors the control channel and parses each subframe containing its downlink scheduling control channel to determine whether to be scheduled. Such working mode can achieve higher efficiency when the data amount of terminal is large and the terminal may be frequently scheduled. However, for some services, the arrival frequency of data is low, resulting in the terminal being scheduled less frequently. If the terminal continues to monitor the control channel, it will undoubtedly increase the power consumption of the terminal. In order to solve the problem of power consumption, the cellular network communication system adopts the DRX working mode. In this working mode, the terminal periodically monitors the control channel, thus achieving the purpose of saving power.

The disadvantage of the related art is that when the terminal communicates with a sidelink interface, the power saving of the sidelink interface cannot be realized.

**SUMMARY**

Embodiments of the present disclosure provide a discontinuous reception processing method, a terminal, a device, and a medium, so as to solve the power saving of the sidelink interface.

In a first aspect, an embodiment of the present disclosure provide a DRX processing method, applied to a target node for determining DRX configuration, includes: determining sidelink DRX configuration corresponding to a specific target of the sidelink interface; wherein the specific target is a first combination of a sidelink interface source identity and a sidelink interface destination identity, or a second combination of the sidelink interface source identity, the sidelink interface destination identity and a cast type of the sidelink interface, or the specific target is the cast type of the sidelink interface.

In some embodiment, the cast type of the sidelink interface is unicast, groupcast, broadcast; or, unicast and multicast.

In some embodiment, the determining sidelink DRX configuration corresponding to a specific target of the sidelink interface includes one of the following: when the cast type of the sidelink interface is unicast, the target node being any terminal participating in unicast communication of the sidelink interface; when the cast type of the sidelink interface is broadcast or groupcast or mulicast, the target node being a transmitting terminal participating in the broadcast or groupcast or mulicast communication of the sidelink interface.

In some embodiment, the determining sidelink DRX configuration corresponding to a specific target of the sidelink interface comprises one of the following or a combination thereof: for the sidelink interface, determining the DRX configuration corresponding to the specific target of the sidelink interface based on rules defined in protocol or based on preconfiguration; or, determining the DRX configuration corresponding to the specific target of the sidelink interface based on a connection state of Uu interface of the target node; or, determining the DRX configuration corresponding to the specific target of the sidelink interface based on implementation of the target node.

In some embodiment, the determining the DRX configuration corresponding to the specific target of the sidelink interface based on a connection state of Uu interface of the target node comprises one of the following or a combination thereof: if the connection state of the Uu interface of the target node is a RRC connected state, obtaining DRX configuration information corresponding to the specific target of the sidelink interface from a network side device serving the target node through dedicated signaling, and determining the DRX configuration corresponding to the specific target of the sidelink interface according to the DRX configuration information; if the connection state of the Uu interface of the target node is a RRC idle state or inactive state, obtaining the DRX configuration information corresponding to the specific target of the sidelink interface from the network side device serving the target node through broadcast, and determining the DRX configuration corresponding to the specific target of the sidelink interface according to the DRX configuration information; if the connection state of the Uu interface of the target node is an off-network state, obtaining the DRX configuration information corresponding to the specific target of the sidelink interface from pre-configured information, and determining the DRX configuration corresponding to the specific target of the sidelink interface according to the DRX configuration information.

In some embodiment, the DRX configuration information includes one or a combination of the following: identification information of the specific target of the sidelink interface, and the DRX configuration corresponding to the specific target of the sidelink interface.

In some embodiment, when determining the DRX configuration corresponding to the specific target of the sidelink interface, the method further includes: receiving, by the target node, first assistant information from a sidelink peer terminal of the target node, wherein a content of the first assistant information includes the DRX configuration corresponding to the specific target of the sidelink interface proposed by the sidelink peer terminal; and/or, if the connection state of the Uu interface of the target node is the RRC connected state, transmitting, by the target node, second assistant information to a base station serving the target node, wherein a content of the second assistant information includes the DRX configuration corresponding to the specific target of the sidelink interface proposed by the target node or the sidelink peer terminal of the target node.

In some embodiment, after the determining the sidelink DRX configuration corresponding to the specific target of the sidelink interface, the method includes one of the following or a combination thereof: when the cast type of the sidelink interface is unicast, transmitting, by the target node, the DRX configuration information corresponding to the specific target of the sidelink interface to the sidelink peer terminal by unicast singling of the sidelink interface; or, when the cast type of the sidelink interface is groupcast, transmitting, by the target node, the DRX configuration information corresponding to the specific target of the sidelink interface to the sidelink peer terminal by a groupcast mode of the sidelink interface; or, when the cast type of the sidelink interface is broadcast, transmitting, by the target node, the DRX configuration information corresponding to the specific target of the sidelink interface to the sidelink peer terminal by a broadcast mode of the sidelink interface.

In some embodiment, the sidelink interface signaling includes one or a combination of the following signaling: PC5 Radio Resource Control (RRC) signaling, PC5 Media Access Control Control Element (MAC CE) or PC5 Physical Layer (PHY) signaling.

In some embodiment, repeatedly transmitting the DRX configuration information of the specific target of the sidelink interface to the sidelink peer terminal in one of the following modes or a combination thereof: repeated transmissions according to a preset number of times; or, repeated transmissions according to a preset period T; or, repeated transmissions on a specific time or frequency domain resource.

In some embodiment, the preset period T is determined according to a pre-configuration or a protocol agreement, and according to a period of the DRX configuration.

In some embodiment, the specific time domain or frequency domain resource is determined according to a pre-configuration or a protocol agreement, or negotiated between terminals in sidelink.

In some embodiment, the DRX configuration information of the specific target of the sidelink interface includes one of the following information or a combination thereof: a DRX start point, a DRX cycle length, a DRX active period length, a DRX inactive period length, a Hybrid Automatic Repeat reQuest (HARQ) Round Trip Time (RTT) timer, a HARQ retransmission timer, and a DRX inactive timer.

In a second aspect, an embodiment of the present disclosure provides a A DRX processing method, applied to a sidelink peer terminal of a target node for determining DRX configuration, includes: receiving DRX configuration information corresponding to a specific target of a sidelink interface, wherein the DRX configuration information corresponding to the specific target of the sidelink interface is determined by the target node for determining DRX configuration based on the specific target of the sidelink interface; the specific target is a first combination of a sidelink interface source identity and a sidelink interface destination identity, or a second combination of the sidelink interface source identity, the sidelink interface destination identity and a cast type of the sidelink interface, or the specific target is the cast type of the sidelink interface.

In some embodiment, the cast type of the sidelink interface is unicast, groupcast, broadcast; or, unicast and multicast.

In some embodiment, when the cast type of the sidelink interface is unicast, receiving the DRX configuration information corresponding to the specific target of the sidelink interface from the target node by unicast signaling of the sidelink interface; or, when the cast type of the sidelink interface is groupcast, receiving the DRX configuration information corresponding to the specific target of the sidelink interface from the target node by a groupcast mode of the sidelink interface; or, when the cast type of the sidelink interface is broadcast, receiving the DRX configuration information corresponding to the specific target of the sidelink interface from the target node by a broadcast mode of the sidelink interface; wherein, when the cast type of the sidelink interface is unicast, the target node is any terminal participating in unicast communication of the sidelink interface; when the cast type of the sidelink interface is broadcast or groupcast or mulicast, the target node is a transmitting terminal participating in broadcast or groupcast or mulicast communication of the sidelink interface.

In some embodiment, the sidelink interface signaling includes one or a combination of the following signaling: PC5-RRC signaling, PC5 MAC CE or PC5 PHY signaling.

In some embodiment, repeatedly receiving the DRX configuration information of the specific target of the sidelink interface in one of the following modes or a combination thereof: repeated transmissions according to a preset number of times; or, repeated transmissions according to a preset period T; or, repeated transmissions on a specific time or frequency domain resource.

In some embodiment, the preset period T is determined according to a pre-configuration or a protocol agreement, and according to a period of the DRX configuration.

In some embodiment, the specific time domain or frequency domain resource is determined according to a pre-configuration or a protocol agreement, or negotiated between terminals in sidelink.

In some embodiment, the method further includes: transmitting first assistant information to the target node, wherein a content of the first assistant information includes the DRX configuration corresponding to the specific target of the sidelink interface proposed by the sidelink peer terminal of the target node.

In some embodiment, the DRX configuration information of the specific target the sidelink interface includes one of the following information or a combination thereof: a DRX start point, a DRX cycle length, a DRX active period length, a DRX inactive period length, a HARQ RTT timer, a HARQ retransmission timer, and a DRX inactive timer.

In a third aspect, an embodiment of the present disclosure provides a sidelink terminal, being a target node for determining DRX configuration, includes: a processor, configured to read a program in a memory and perform the following processes: determining sidelink DRX configuration corresponding to a specific target of the sidelink interface; wherein the specific target is a first combination of a sidelink interface source identity and a sidelink interface destination identity, or a second combination of the sidelink interface source identity, the sidelink interface destination identity and a cast type of the sidelink interface, or the specific target is the cast type of the sidelink interface ; a transceiver, configured to receive and transmit data under the control of the processor.

In some embodiment, the cast type of the sidelink interface is unicast, groupcast, broadcast; or, unicast and multicast.

In some embodiment, the processor is further configured to read the program in the memory and perform one of the following processes: when the cast type of the sidelink interface is unicast, the target node being any terminal participating in unicast communication of the sidelink interface; when the cast type of the sidelink interface is broadcast or groupcast or mulicast, the target node being a transmitting terminal participating in the broadcast or groupcast or mulicast communication of the sidelink interface.

In some embodiment, the processor is further configured to read the program in the memory and perform one or a combination of the following processes: for the sidelink interface, determining the DRX configuration corresponding to the specific target of the sidelink interface based on rules defined in protocol or based on preconfiguration; or, determining the DRX configuration corresponding to the specific target of the sidelink interface based on a connection state of Uu interface of the target node; or, determining the DRX configuration corresponding to the specific target of the sidelink interface based on implementation of the target node.

In some embodiment, the processor is further configured to read the program in the memory and perform one or a combination of the following processes: if the connection state of the Uu interface of the target node is a RRC connected state, obtaining DRX configuration information corresponding to the specific target of the sidelink interface from a network side device serving the target node through dedicated signaling, and determining the DRX configuration corresponding to the specific target of the sidelink interface according to the DRX configuration information; if the connection state of the Uu interface of the target node is a RRC idle state or inactive state, obtaining the DRX configuration information corresponding to the specific target of the sidelink interface from the network side device serving the target node through broadcast, and determining the DRX configuration corresponding to the specific target of the sidelink interface according to the DRX configuration information; if the connection state of the Uu interface of the target node is an off-network state, obtaining the DRX configuration information corresponding to the specific target of the sidelink interface from pre-configured information, and determining the DRX configuration corresponding to the specific target of the sidelink interface according to the DRX configuration information.

In some embodiment, the DRX configuration information includes one or a combination of the following: identification information of the specific target of the sidelink interface, and the DRX configuration corresponding to the specific target of the sidelink interface.

In some embodiment, when determining the DRX configuration corresponding to the specific target of the sidelink interface, the processor is further configured to read the program in the memory and perform the following processes: receiving, by the target node, first assistant information from a sidelink peer terminal of the target node, wherein a content of the first assistant information includes the DRX configuration corresponding to the specific target of the sidelink interface proposed by the sidelink peer terminal; and/or, if the connection state of the Uu interface of the target node is the RRC connected state, transmitting, by the target node, second assistant information to a base station serving the target node, wherein a content of the second assistant information includes the DRX configuration corresponding to the specific target of the sidelink interface proposed by the target node or the sidelink peer terminal of the target node.

In some embodiment, after determining the sidelink DRX configuration corresponding to the specific target of the sidelink interface, the processor is further configured to read the program in the memory and perform one or a combination of the following processes: when the cast type of the sidelink interface is unicast, transmitting, by the target node, the DRX configuration information corresponding to the specific target of the sidelink interface to the sidelink peer terminal by unicast singling of the sidelink interface; or, when the cast type of the sidelink interface is groupcast, transmitting, by the target node, the DRX configuration information corresponding to the specific target of the sidelink interface to the sidelink peer terminal by a groupcast mode of the sidelink interface; or, when the cast type of the sidelink interface is broadcast, transmitting, by the target node, the DRX configuration information corresponding to the specific target of the sidelink interface to the sidelink peer terminal by a broadcast mode of the sidelink interface.

In some embodiment, the sidelink interface signaling comprises one or a combination of the following signaling: PC5-RRC signaling, PC5 MAC CE or PC5 PHY signaling.

In some embodiment, the processor is further configured to read the program in the memory and perform the following processes: repeatedly transmitting the DRX configuration information of the specific target of the sidelink interface to the sidelink peer terminal in one of the following modes or a combination thereof: repeated transmissions according to a preset number of times; or, repeated transmissions according to a preset period T; or, repeated transmissions on a specific time or frequency domain resource.

In some embodiment, the preset period T is determined according to a pre-configuration or a protocol agreement or according to a period of the DRX configuration.

In some embodiment, the specific time domain or frequency domain resource is determined according to a pre-configuration or a protocol agreement or negotiated between terminals in sidelink.

In some embodiment, the DRX configuration information of the specific target of the sidelink interface includes one of the following information or a combination thereof: a DRX start point, a DRX cycle length, a DRX active period length, a DRX inactive period length, a HARQ RTT timer, a HARQ retransmission timer, and a DRX inactive timer.

In a fourth aspect, an embodiment of the present disclosure provides a DRX processing device, including: a determining module, configured to determine sidelink DRX configuration corresponding to a specific target of a sidelink interface based on the specific target of the sidelink interface; wherein the specific target is a first combination of a sidelink interface source identity and a sidelink interface destination identity, or a second combination of the sidelink interface source identity, the sidelink interface destination identity and a cast type of the sidelink interface, or the specific target is the cast type of the sidelink interface.

In some embodiment, the cast type of the sidelink interface is unicast, groupcast, broadcast; or, unicast and multicast.

In some embodiment, the determining sidelink DRX configuration corresponding to a specific target of the sidelink interface includes one of the following: when the cast type of the sidelink interface is unicast, the target node being any terminal participating in unicast communication of the sidelink interface; when the cast type of the sidelink interface is broadcast or groupcast or mulicast, the target node being a transmitting terminal participating in the broadcast or groupcast or mulicast communication of the sidelink interface.

In some embodiment, the determining sidelink DRX configuration corresponding to a specific target of the sidelink interface comprises one of the following or a combination thereof: for the sidelink interface, determining the DRX configuration corresponding to the specific target of the sidelink interface based on rules defined in protocol or based on preconfiguration; or, determining the DRX configuration corresponding to the specific target of the sidelink interface based on a connection state of Uu interface of the target node; or, determining the DRX configuration corresponding to the specific target of the sidelink interface based on implementation of the target node.

In some embodiment, the determining the DRX configuration corresponding to the specific target of the sidelink interface based on a connection state of Uu interface of the target node comprises one of the following or a combination thereof: if the connection state of the Uu interface of the target node is a RRC connected state, obtaining DRX configuration information corresponding to the specific target of the sidelink interface from a network side device serving the target node through dedicated signaling, and determining the DRX configuration corresponding to the specific target of the sidelink interface according to the DRX configuration information; if the connection state of the Uu interface of the target node is a RRC idle state or inactive state, obtaining the DRX configuration information corresponding to the specific target of the sidelink interface from the network side device serving the target node through broadcast, and determining the DRX configuration corresponding to the specific target of the sidelink interface according to the DRX configuration information; if the connection state of the Uu interface of the target node is an off-network state, obtaining the DRX configuration information corresponding to the specific target of the sidelink interface from pre-configured information, and determining the DRX configuration corresponding to the specific target of the sidelink interface according to the DRX configuration information.

In some embodiment, the DRX configuration information includes one or a combination of the following: identification information of the specific target of the sidelink interface, and the DRX configuration corresponding to the specific target of the sidelink interface.

In some embodiment, when determining the DRX configuration corresponding to the specific target of the sidelink interface, the method further includes: receiving, by the target node, first assistant information from a sidelink peer terminal of the target node, wherein a content of the first assistant information includes the DRX configuration corresponding to the specific target of the sidelink interface proposed by the sidelink peer terminal; and/or, if the connection state of the Uu interface of the target node is the RRC connected state, transmitting, by the target node, second assistant information to a base station serving the target node, wherein a content of the second assistant information includes the DRX configuration corresponding to the specific target of the sidelink interface proposed by the target node or the sidelink peer terminal of the target node.

In some embodiment, after the determining the sidelink DRX configuration corresponding to the specific target of the sidelink interface, the method includes one of the following or a combination thereof: when the cast type of the sidelink interface is unicast, transmitting, by the target node, the DRX configuration information corresponding to the specific target of the sidelink interface to the sidelink peer terminal by unicast singling of the sidelink interface; or, when the cast type of the sidelink interface is groupcast, transmitting, by the target node, the DRX configuration information corresponding to the specific target of the sidelink interface to the sidelink peer terminal by a groupcast mode of the sidelink interface; or, when the cast type of the sidelink interface is broadcast, transmitting, by the target node, the DRX configuration information corresponding to the specific target of the sidelink interface to the sidelink peer terminal by a broadcast mode of the sidelink interface.

In some embodiment, the sidelink interface signaling includes one or a combination of the following signaling: PC5 Radio Resource Control (RRC) signaling, PC5 Media Access Control Control Element (MAC CE) or PC5 Physical Layer (PHY) signaling.

In some embodiment, repeatedly transmitting the DRX configuration information of the specific target of the sidelink interface to the sidelink peer terminal in one of the following modes or a combination thereof: repeated transmissions according to a preset number of times; or, repeated transmissions according to a preset period T; or, repeated transmissions on a specific time or frequency domain resource.

In some embodiment, the preset period T is determined according to a pre-configuration or a protocol agreement, and according to a period of the DRX configuration.

In some embodiment, the specific time domain or frequency domain resource is determined according to a pre-configuration or a protocol agreement, or negotiated between terminals in sidelink.

In some embodiment, the DRX configuration information of the specific target of the sidelink interface includes one of the following information or a combination thereof: a DRX start point, a DRX cycle length, a DRX active period length, a DRX inactive period length, a Hybrid Automatic Repeat reQuest (HARQ) Round Trip Time (RTT) timer, a HARQ retransmission timer, and a DRX inactive timer.

In a fifth aspect, a sidelink terminal, being a sidelink peer terminal of a target node for determining DRX configuration, includes: a processor, configured to read a program in a memory and perform the following processes: receiving DRX configuration information corresponding to a specific target of a sidelink interface, wherein the DRX configuration information corresponding to the specific target of the sidelink interface is determined by the target node for determining DRX configuration based on the specific target of the sidelink interface; the specific target is a first combination of a sidelink interface source identity and a sidelink interface destination identity, or a second combination of the sidelink interface source identity, the sidelink interface destination identity and a cast type of the sidelink interface, or the specific target is the cast type of the sidelink interface; transmitting and/or receiving data according to the DRX configuration information; a transceiver, configured to receive and transmit data under the control of the processor.

In some embodiment, the cast type of the sidelink interface is unicast, groupcast, broadcast; or, unicast and multicast.

In some embodiment, the processor is further configured to read the program in the memory and perform the following processes: when the cast type of the sidelink interface is unicast, receiving the DRX configuration information corresponding to the specific target of the sidelink interface from the target node by unicast signaling of the sidelink interface; or, when the cast type of the sidelink interface is multicast, receiving the DRX configuration information corresponding to the specific target of the sidelink interface from the target node by a multicast mode of the sidelink interface;

or, when the cast type of the sidelink interface is broadcast, receiving the DRX configuration information corresponding to the specific target of the sidelink interface from the target node by a broadcast mode of the sidelink interface; wherein, when the cast type of the sidelink interface is unicast, the target node is any terminal participating in unicast communication of the sidelink interface; when the cast type of the sidelink interface is broadcast or groupcast or mulicast, the target node is a transmitting terminal participating in broadcast or groupcast or mulicast communication of the sidelink interface.

In some embodiment, the sidelink interface signaling includes one or a combination of the following signaling: PC5-RRC signaling, PC5 MAC CE or PC5 PHY signaling.

In some embodiment, repeatedly receiving the DRX configuration information of the specific target of the sidelink interface in one of the following modes or a combination thereof: repeated transmissions according to a preset number of times; or, repeated transmissions according to a preset period T; or, repeated transmissions on a specific time or frequency domain resource.

In some embodiment, the preset period T is determined according to a pre-configuration or a protocol agreement, and according to a period of the DRX configuration.

In some embodiment, the specific time domain or frequency domain resource is determined according to a pre-configuration or a protocol agreement, or negotiated between terminals in sidelink.

In some embodiment, the processor is further configured to read the program in the memory and perform the following processes: transmitting first assistant information to the target node, wherein a content of the first assistant information includes the DRX configuration corresponding to the specific target of the sidelink interface proposed by the sidelink peer terminal of the target node.

In some embodiment, the DRX configuration information of the specific target the sidelink interface includes one of the following information or a combination thereof: a DRX start point, a DRX cycle length, a DRX active period length, a DRX inactive period length, a HARQ RTT timer, a HARQ retransmission timer, and a DRX inactive timer.

In a sixth aspect, an embodiment of the present disclosure provides a DRX processing device, includes: a receiving module, configured to receive DRX configuration information corresponding to a specific target of a sidelink interface, wherein the DRX configuration information corresponding to the specific target of the sidelink interface is determined by the target node for determining DRX configuration based on the specific target of the sidelink interface; the specific target is a first combination of a sidelink interface source identity and a sidelink interface destination identity, or a second combination of the sidelink interface source identity, the sidelink interface destination identity and a cast type of the sidelink interface, or the specific target is the cast type of the sidelink interface; a transmission module, configured to send and/or receive data according to the DRX configuration information.

In some embodiment, the cast type of the sidelink interface is unicast, groupcast, broadcast; or, unicast and multicast.

In some embodiment, when the cast type of the sidelink interface is unicast, receiving the DRX configuration information corresponding to the specific target of the sidelink interface from the target node by unicast signaling of the sidelink interface; or, when the cast type of the sidelink interface is multicast, receiving the DRX configuration information corresponding to the specific target of the sidelink interface from the target node by a multicast mode of the sidelink interface; or, when the cast type of the sidelink interface is broadcast, receiving the DRX configuration information corresponding to the specific target of the sidelink interface from the target node by a broadcast mode of the sidelink interface; wherein, when the cast type of the sidelink interface is unicast, the target node is any terminal participating in unicast communication of the sidelink interface; when the cast type of the sidelink interface is broadcast or groupcast or mulicast, the target node is a transmitting terminal participating in broadcast or groupcast or mulicast communication of the sidelink interface.

In some embodiment, the sidelink interface signaling includes one or a combination of the following signaling: PC5-RRC signaling, PC5 MAC CE or PC5 PHY signaling.

In some embodiment, repeatedly receiving the DRX configuration information of the specific target of the sidelink interface in one of the following modes or a combination thereof: repeated transmissions according to a preset number of times; or, repeated transmissions according to a preset period T; or, repeated transmissions on a specific time or frequency domain resource.

In some embodiment, the preset period T is determined according to a pre-configuration or a protocol agreement, and according to a period of the DRX configuration.

In some embodiment, the specific time domain or frequency domain resource is determined according to a pre-configuration or a protocol agreement, or negotiated between terminals in sidelink.

In some embodiment, the DRX processing device is further configured to: send first assistant information to the target node, wherein a content of the first assistant information includes the DRX configuration corresponding to the specific target of the sidelink interface proposed by the sidelink peer terminal of the target node.

In some embodiment, the DRX configuration information of the specific target the sidelink interface includes one of the following information or a combination thereof: a DRX start point, a DRX cycle length, a DRX active period length, a DRX inactive period length, a HARQ RTT timer, a HARQ retransmission timer, and a DRX inactive timer.

In a seventh aspect, an embodiment of the present disclosure provides a computer-readable storage medium storing a computer program, wherein the computer program is executed by a processor to implement the steps of the DRX processing method.

The present disclosure has the following advantages.

The method disclosed in an embodiment of the present disclosure includes determining sidelink DRX configuration corresponding to a specific target of the sidelink interface; wherein the specific target is a first combination of a sidelink interface source identity and a sidelink interface destination identity, or a second combination of the sidelink interface source identity, the sidelink interface destination identity and a cast type of the sidelink interface. Further, the DRX configuration corresponding to a specific target of a sidelink interface is sent to an peer terminal, and the peer terminal performs transmitting and/or receiving data according to the DRX configuration. Since the DRX configuration is introduced to the sidelink terminal and the sidelink peer terminal, power saving can be achivied for the sidelink interface. The DRX of the sidelink interface may be achieved and better power saving can be achieved for the sidelink terminal.

**BRIEF DESCRIPTION OF THE DRAWINGS**

The accompanying drawings described herein are used to provide further understanding of the present disclosure and constitute a part of the present disclosure. The exemplary embodiments of the present disclosure and their descriptions are used to explain the present disclosure and do not constitute an improper limitation of the present disclosure.

FIG. 1 is a schematic diagram of a cellular communication network in an embodiment of the present disclosure;
FIG. 2 is a schematic diagram of a DRX process in an embodiment of the present disclosure;
FIG. 3 is a schematic diagram of Sidelink discovery/communication in an embodiment of the disclosure;
FIG. 4 is a schematic flowchart of the implementation of the DRX processing method on a sidelink terminal side in the embodiment of the present disclosure;
FIG. 5 is a schematic flowchart of implementing a DRX processing method on a sidelink peer terminal of a sidelink terminal in an embodiment of the present disclosure;
FIG. 6 is a schematic flowchart of the implementation of the DRX processing method in Embodiment 1 of the present disclosure;
FIG. 7 is a schematic flowchart of the implementation of the DRX processing method in Embodiment 2 of the present disclosure;
FIG. 8 is a schematic flowchart of the implementation of the DRX processing method in Embodiment 3 of the present disclosure;
FIG. 9 is a schematic flowchart of the implementation of the DRX processing method in Embodiment 4 of the present disclosure;
FIG. 10 is a schematic flowchart of the implementation of the DRX processing method in Embodiment 5 of the present disclosure;
FIG. 11 is a schematic structural diagram of a target node for determining the DRX configuration in an embodiment of the present disclosure;
FIG. 12 is a schematic structural diagram of a UE on a sidelink side of a target node for determining the DRX configuration in an embodiment of the present disclosure.

**DETAILED DESCRIPTION**

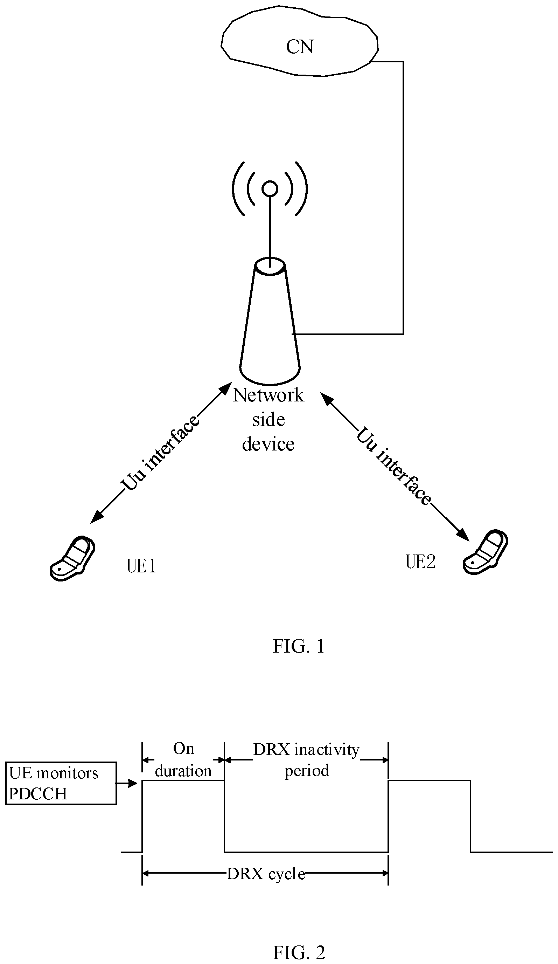

FIG. 1 is a schematic diagram of a cellular communication network. As shown in FIG.1, uplink/downlink data and control information are transmitted between a terminal and a network side device through a Uu interface in the cellular network communication in the related art.

The following is a brief description of the basic principles of DRX:

FIG. 2 is a schematic diagram of a DRX process, and the basic principle of DRX is shown in FIG. 2. On duration indicates the time period during which the UE monitors the control channel, during which the radio frequency channel is turned on and the control channel is continuously monitored; the UE is in a sleep state in a time other than On duration, and the radio frequency link of the UE will be turned off, the control channel is not monitored, so as to achieve the purpose of power saving. On Duration exists in cycle, and the specific cycle is configured by the eNB.

The DRX mechanism of the cellular network considers the arrival model of data services, that is, the data packets is suddenly arrived (it can be understood that once a data packet arrives, more packets will arrive continuously in a short period of time). In order to adapt to this service arrival feature, the LTE DRX process adopts various timers, which are combined with the Hybrid Automatic Repeat reQuest (HARQ) process to achieve better power saving performance.

The following briefly describes the DRX-related timers.
drx-onDurationTimer: The time when the UE periodically wakes up to monitor the control channel is shown in FIG. 2.

Short DRX cycle Timer: In order to better match the data service arrival feature, the cellular network communication system supports the configuration of two DRX cycles: long cycle and short cycle. The on duration timer of the two cycles is the same, but the sleep time is different. In the short cycle, the sleep time is relatively shorter, and the UE can monitor the control channel again faster. Long cycle is necessarily configured and is the initial state of the DRX process; short cycle is optional. The short DRX cycle timer sets the duration of the short cycle. After the Short cycle timer expires, the UE will use the long cycle.

drx-InactivityTimer: After DRX is configured, when the UE receives the control signaling of the HARQ initial transmission within the Active Time that is allowed to monitor the control channel, the timer is turned on. The UE continuously monitors the control channel until the timer expires. If the UE receives the control signaling of HARQ initial transmission before the drx-InactivityTimer expires, the drx-InactivityTimer is stopped and restarted.

HARQ round-trip time timer (HARQ RTT Timer): it divided into drx-HARQ-RTT-TimerDL and drx-HARQ-RTT-TimerUL, the purpose is to make it possible for the UE not to monitor the control channel before the next retransmission arrives, so as to achieve better power saving effect. In the following example, the first symbol after the physical uplink control channel (PUCCH) transmission of the UE-related process is started, and this timer will be turned on. If the data in the corresponding HARQ process is not successfully decoded after the previous HARQ transmission (the UE feeds back NACK), after the DL HARQ RTT Timer expires, the UE turns on drx-RetransmissionTimerDL. If the data in the corresponding HARQ process is successfully decoded after the previous HARQ transmission (the UE feeds back ACK), the UE does not start drx-RetransmissionTimerDL after the drx-HARQ-RTT-TimerDL timer expires. If only drx-HARQ-RTT-TimerDL is currently in operation, the UE does not monitor the control channel.

HARQ retransmission Timer: it is divided into drx-RetransmissionTimerDL or drx-RetransmissionTimerUL. In the following example, during the operation of the DL HARQ retransmission Timer, the UE monitors the control signaling and waits for the retransmission scheduling of the corresponding HARQ process.

Active time under DRX is defined as follows:
It can be seen from the above process that, in the On duration Timer, HARQ retransmission Timer and Inactivity Timer, if any timer is in operation, the UE will monitor the control channel. The time during which the UE monitors the control channel is also called Active Time. In the LTE system, the Active Time is affected by factors other than the DRX timer. The Active Time of the LTE Rel-8 UE includes the following times:

Operation time of drx-onDurationTimer or drx-InactivityTimer or drx-RetransmissionTimerDL or drx-RetransmissionTimerUL or ra-ContentionResolutionTimer;
The time that the UE waits for the base station to send the Physical Downlink Control Channel (PDCCH) after transmitting the Uplink Scheduling Request (SR);
The time for the non-contention random access UE to wait for the PDCCH scheduled by the Cell-Radio Network Temporary Identifier (C-RNTI) after receiving the random access response (RAR).

The onduration calculation under Common DRX is described below.

For the short DRX cycle, the onduration calculation formula is as follows:

$$[(SFN * 10) + \text{subframe number}] \text{ modulo } (shortDRX\text{-}Cycle) = (drxStartOffset)$$
$$modulo(shortDRX\text{-}Cycle);$$

For the long DRX cycle, the onduration calculation formula is as follows:

$$[(SFN * 10) + \text{subframe number}] \text{ modulo } (longDRX\text{-}Cycle) = drxStartOffset:$$

Wherein,

System Frame Number (SFN): a SFN number of a current radio frame;
Subframe number: a number of the current subframe;
shortDRX-Cycle: short DRX cycle;
longDRX-Cycle: long DRX cycle;
drxStartOffset: an offset value configured by radio resource control (RRC) signaling.

Sidelink will be described below.

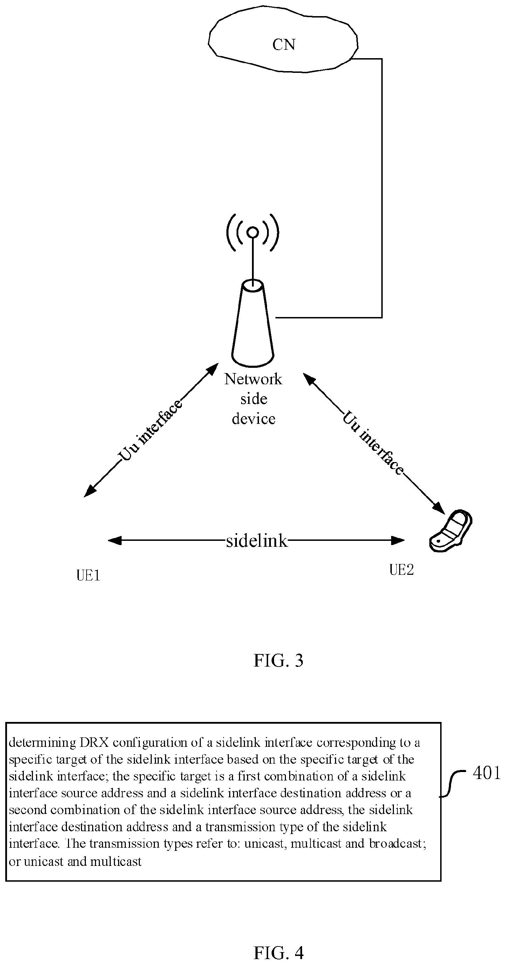

Sidelink refers to that adjacent terminals can transmit data over a sidelink within a short range. The wireless interface corresponding to the Sidelink is called a sidelink interface. FIG. 3 is a schematic diagram of Sidelink discovery/communication.

The DRX of the wireless communication system in the related art is only applicable to the Uu interface between the terminal and the network, and there is no DRX mechanism for the sidelink interface, which means that the sidelink interface cannot save power. For the sidelink interface, no power saving mechanism is supported in the related art, so the terminal consumes power faster and the user experience is not good. Therefore, it is necessary to introduce a power saving mechanism in the sidelink interface. One possible way is to introduce a DRX mechanism in the sidelink interface. However, there is no solution on how to implement DRX in the sidelink interface in the related art.

That is, the disadvantage in the related art is that the terminal keeps in the active state all the time when the communication on the sidelink interface is performed, and the power saving of the sidelink interface cannot be realized.

Based on this, the present disclosure provides a method of the DRX configuration of the sidelink interface. Through this method, DRX of the sidelink interface can be realized, so that the sidelink terminal can save power in a better way.

The specific embodiments of the present disclosure will be described below with reference to the accompanying drawings.

The description will be made from two perspectives of the sidelink terminal and the sidelink peer terminal, and then an example of the combination of the sidelink terminal and the sidelink peer terminal will be given to better understand the implementation of the present disclosure. Such an explanation method does not mean that the two terminals must be implemented together or must be implemented separately. In fact, when the sidelink terminal and the sidelink peer terminal are implemented separately, they also solve their own problems. When the two are used in combination, better technical results may be achieved.

FIG. 4 is a schematic diagram of the flowchart of the DRX processing method on the sidelink terminal side, as shown in FIG. 4, including:

Step 401, determining sidelink DRX configuration corresponding to a specific target of the sidelink interface;

The specific target is a first combination of a sidelink interface source identity and a sidelink interface destination identity or a second combination of the sidelink interface source identity, the sidelink interface destination identity and a cast type of the sidelink interface. The cast types refer to: unicast, multicast and broadcast; or unicast and multicast.

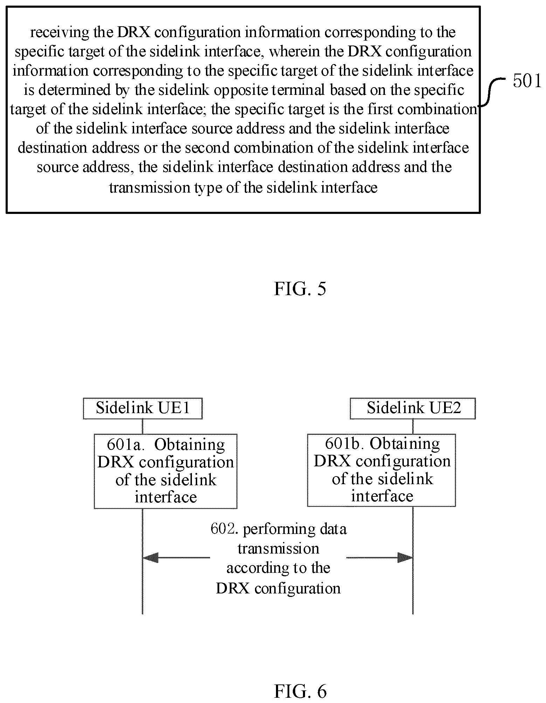

FIG. 5 is a schematic diagram of the flowchart of the DRX processing method on the sidelink peer terminal side, as shown in FIG. 5, including:

Step 501, receiving the DRX configuration information corresponding to the specific target of the sidelink interface, wherein the DRX configuration information corresponding to the specific target of the sidelink interface is determined by the sidelink peer terminal based on the specific target of the sidelink interface; the specific target is the first combination of the sidelink interface source identity and the sidelink interface destination identity or the second combination of the sidelink interface source identity, the sidelink interface destination identity and the cast type of the sidelink interface;

Further, the sidelink interface data can be sent and received according to the DRX configuration information.

The specific target is the first combination of the sidelink interface source identity and the sidelink interface destination identity or the second combination of the sidelink interface source identity, the sidelink interface destination identity and the cast type of the sidelink interface. The cast types refer to: unicast, multicast and broadcast; or unicast and multicast.

In implementation, when the cast type of the sidelink interface is unicast, the target node is any terminal participating in the unicast communication of the sidelink interface;

When the cast type of the sidelink interface is broadcast, or multicast, the target node is a transmitting terminal participating in the broadcast or groupcast or mulicast communication of the sidelink interface.

In implementation, the sidelink DRX configuration corresponding to the specific target of the sidelink interface is determined based on the specific target of the sidelink interface, including one of the following or a combination thereof:

For the sidelink interface, determining the DRX configuration corresponding to the specific target of the sidelink interface based on rules defined in protocol or based on preconfiguration; or,

Determining the DRX configuration corresponding to the specific target of the sidelink interface based on a connection state of a target node for determining the DRX configuration in the Uu interface; or,

Determining the DRX configuration corresponding to the specific target of the sidelink interface based on the implementation of the target node.

The technical meaning of the word "implementation" used in the embodiments of the present disclosure may adopt the meaning in the industry, for example, refer to the technical meaning of the UE implementation in the 3GPP standard.

The three methods are described below.

1. For the sidelink interface, the DRX configuration corresponding to the specific target of the sidelink interface is determined by using a protocol agreement or a pre-configuration mode.

That is, the DRX configuration corresponding to the combination of the source identity/destination identity of the sideink interface or the combination of the source identity/destination identity/cast type of the sidelink interface is a protocol agreement or pre-configured. If a specific target is the combination of the source identity/destination identity/cast type of the sidelink interface, the same or different DRX configurations may be assigned for unicast, broadcast and groupicast. In this way, no interaction is required between the sidelink transmitting terminal and the sidelink receiving terminal.

2. the DRX configuration corresponding to the specific target of the sidelink interface is determined based on the connection state of the Uu interface of the target node for determining the DRX configuration.

Specifically, different methods of determining the DRX configuration are adopted based on the connection state of the Uu interface of the target node for determining the DRX configuration.

In the implementation, the DRX configuration corresponding to the specific target of the sidelink interface is determined based on the connection state of the Uu interface of the target node for determining the DRX configuration, including one of the following or a combination thereof:

If the connection state of the Uu interface of the target node for determining the DRX configuration is the RRC connected state, obtaining the DRX configuration information corresponding to the specific target of the sidelink interface from a network side device serving the target node through dedicated signaling, and determining the DRX configuration corresponding to the specific target of the sidelink interface according to the DRX configuration information;

If the connection state of the Uu interface of the target node for determining the DRX configuration is the RRC idle state or inactive state, obtaining the DRX configuration corresponding to the specific target of the sidelink interface from the network side device serving the target node through broadcast, and determining the DRX configuration corresponding to the specific target of the sidelink interface according to the DRX configuration information;

If the connection state of the Uu interface of the target node for determining the DRX configuration is the off-network state, obtaining the DRX configuration information corresponding to the specific target of the sidelink interface from the pre-configured information, and determining the DRX configuration corresponding to the specific target of the sidelink interface according to the DRX configuration information.

In a specific implementation, the DRX configuration information includes one or a combination of the following information:

Identification information of the specific target of the sidelink interface, and the DRX configuration corresponding to the specific target of the sidelink interface.

Each of them will be described below.

(1) If the connection state of the Uu interface of the target node for determining the DRX configuration is the RRC connected state, obtaining the DRX configuration information corresponding to the specific target of the sidelink interface from the network side device serving the target node through dedicated signaling, and determining the DRX configuration corresponding to the specific target of the sidelink interface according to the DRX configuration information.

Specifically, it is handled as follows:

The target node for determining the DRX configuration obtains the DRX configuration information of the sidelink interface from the network side device serving the target node through dedicated signaling (RRC signaling, Media Access Control (MAC) signaling, or physical layer signaling) and determine the DRX configuration information as the DRX configuration of the sidelink interface.

The specific content of the DRX configuration information includes at least: the combination of the source identity/destination identity of the sidelink interface or the source identity/destination identity/cast type of the sidelink interface; and the corresponding DRX configuration.

(2) If the connection state of the Uu interface of the target node for determining the DRX configuration is the RRC idle state or the inactive state, obtaining the DRX configuration information corresponding to the specific target of the sidelink interface from the network side device serving the target node through broadcast; and determining the DRX configuration corresponding to the specific target of the sidelink interface according to the DRX configuration information.

Specifically, the processing is as follows:

The target node for determining the DRX configuration obtains the DRX configuration information of the sidelink interface from the network side device serving the target node by broadcasting a system information block (SIB), and determines the DRX configuration information as the DRX configuration of the sidelink interface.

The specific content of the DRX configuration information includes at least: a combination of source identity/destination identity of the sidelink interface source or address/destination identity/cast type of the sidelink interface; and the corresponding DRX configuration, or, the cast type of the sidelink interface and the corresponding DRX configuration.

(3) If the connection state of the Uu interface of the target node for determining the DRX configuration is the off-network state, obtaining the DRX configuration information corresponding to the specific target of the sidelink interface from the pre-configured information, and determining the DRX configuration corresponding to the specific target of the sidelink interface according to the DRX configuration information.

Specifically, the processing is as follows:

The target node obtains the DRX configuration information of the sidelink interface from the pre-configured information, and determines the DRX configuration information as the DRX configuration of the sidelink interface.

The specific content of the DRX configuration information includes at least: a combination of source identity/destination identity of the sidelink interface or source identity/destination identity/cast type of the sidelink interface; and the corresponding DRX configuration; or, the cast type of the sidelink interface and the corresponding DRX configuration.

3. Determining the DRX configuration corresponding to the specific target of the sidelink interface based on the implementation of the target node for determining the DRX configuration.

Specifically, the DRX configuration corresponding to the specific target of the sidelink interface is determined based on the implementation of the target node for determining the DRX configuration, and the specific mode of the implementation is not limited herein.

In implementation, when determining the DRX configuration corresponding to the specific target of the sidelink interface, the method further includes:

Receiving, by the target node for determining the DRX configuration, first assistant information from a sidelink peer terminal of the sidelink terminal, wherein the content of the first assistant information includes the DRX configuration corresponding to the specific target of the sidelink interface proposed by the sidelink peer terminal; and/or,

If the connection state of the Uu interface of the target node for determining the DRX configuration is the RRC connected state, transmitting, by the target node, second assistant information to a base station serving the target node, wherein the content of the second assistant information may be the DRX configuration corresponding to the specific target of the sidelink interface proposed by the target node or the sidelink peer terminal of the target node, but is not limited to.

In order for the target node for determining the DRX configuration to determine the DRX configuration corresponding to the specific target of the sidelink interface, for the sidelink peer terminal of the target node for determining the DRX configuration, the method may further include:

Transmitting first assistant information to the target node for determining the DRX configuration, wherein the content of the first assistant information includes the DRX configuration corresponding to the specific target of the sidelink interface proposed by the sidelink peer terminal.

Based on the above-mentioned modes 2 and 3, for unicast communication of the sidelink interface, the sidelink peer terminal can send assistant information to the target node for determining the DRX configuration, and the content of the assistant information can be but not limited to:

DRX configuration information proposed by the sidelink peer terminal.

If the target node for determining the DRX configuration in the Uu interface is in the RRC connected state, the target node for determining the DRX configuration may also forward the DRX configuration information to the base station serving the target node.

In the implementation, after determining the sidelink DRX configuration corresponding to the specific target of the sidelink interface, one of the following or a combination thereof is further included:

When the cast type of the sidelink interface is unicast communication, transmitting, by the target node for determining the DRX configuration, the DRX configuration information corresponding to the specific target of the sidelink interface to the sidelink peer terminal by a sidelink interface singling; or,

When the cast type of the sidelink interface is groupcast communication, transmitting, by the target node for determining the DRX configuration, the DRX configuration information corresponding to the specific target of the sidelink interface to the sidelink peer terminal by groupcasting; or,

When the cast type of the sidelink interface is broadcast communication, transmitting, by the target node for determining the DRX configuration, the DRX configuration information corresponding to the specific target of the sidelink interface to the sidelink peer terminal by broadcasting.

Correspondingly, the sidelink peer terminal of the target node for determining the DRX configuration needs to executing the following steps:

When the cast type of the sidelink interface is unicast communication, receiving the DRX configuration information corresponding to the specific target of the sidelink interface from the target node for determining the DRX configuration by the sidelink interface signaling; or,
When the cast type of the sidelink interface is groupcast communication, receiving the DRX configuration information corresponding to the specific target of the sidelink interface from the target node for determining the DRX configuration by groupcasting; or,
When the cast type of the sidelink interface is broadcast communication, receiving the DRX configuration information corresponding to the specific target of the sidelink interface from the target node for determining the DRX configuration by broadcasting.

Based on the above modes 2 and 3, after determining the DRX configuration of the sidelink interface by the target node for determining the DRX configuration based on the combination of source identity/destination identity of the sidelink interface or the combination of source identity/destination identity/cast type of the sidelink interface, the method includes:
For unicast of the sidelink interface, notifying, by the target node for determining the DRX configuration, the DRX configuration information of the sidelink interface to the sidelink peer terminal of the sidelink terminal interface through the sidelink interface signaling.
For groupcast of the sidelink interface, notifying, by the target node for determining the DRX configuration, the DRX configuration information of the sidelink interface to the sidelink peer terminal of the sidelink terminal interface through a groupcast mode.
For broadcast of the sidelink interface, notifying, by the target node for determining the DRX configuration, the DRX configuration information of the sidelink interface to the sidelink peer terminal of the sidelink terminal interface through a broadcast mode.
In a specific implementation, the sidelink interface signaling includes one or a combination of the following signaling: PC5-RRC signaling, PC5 MAC CE or PC5 PHY signaling.
The specific notification mode of the DRX configuration may adopt the PC5-RRC signaling, PC5 Media Access Control Control Element (MAC CE) or PC5 Physical Layer (PHY) signaling.
In implementation, the target node for determining the DRX configuration may repeatedly send the DRX configuration information of the specific target of the sidelink interface to the sidelink peer terminal of the sidelink terminal in one of the following modes or a combination thereof:

Repeated transmissions according to a preset number of times; or,
Repeated transmissions according to a preset period T; or,
Repeated transmissions on a specific time or frequency domain resource.

In a specific implementation, the preset period T is determined according to a pre-configuration or a protocol agreement, and according to a period of the DRX configuration.
In a specific implementation, the specific time domain or frequency domain resource is determined according to a pre-configuration or a protocol agreement, or negotiated between terminals in sidelink.
Based on the above-mentioned groupcast and broadcast, the target node for determining the DRX configuration may use a repeated transmission mode when transmitting the DRX configuration. The specific repeated transmission rule can be one or a combination of the following:

the repeated transmission mechanism used for each transmission of the DRX configuration, that is, repeated transmission for N times in a continuous time unit;
the repeated transmission of the DRX configuration according to a certain period T;

The value of the period T may be pre-configured or agreed in a protocol; the period T may also be the period of the DRX.
The DRX configuration is repeatedly transmitted on specific time/frequency domain resources; the specific time/frequency resources may be agreed in the protocol or preconfigured, or notified by the sidelink transmitting terminal to the sidelink receiving terminal.
In implementation, the DRX configuration information of the sidelink interface includes one of the following information or a combination thereof:
A DRX start point, a DRX cycle length, a DRX active period length, a DRX inactive period length, a HARQ RTT timer, a HARQ retransmission timer, and a DRX inactive timer.

Specifically, for the unicast/groupcast/broadcast of the sidelink interface, the content of the DRX configuration at least includes the following information:

The DRX starting point;
The DRX cycle length;
The DRX activation period length or the DRX inactivity period length (which can be a specific time length or timer length);

Optionally, it can also carry the length of the related timer for maintaining DRX, for example:

HARQ RTT timer;
HARQ retransmission timer;
DRX inactivity timer.
Examples are given below.

Example 1:

In this example, for the sidelink interface, the DRX configuration corresponding to the specific target of the sidelink interface is determined in a protocol agreement or a pre-configuration mode.

FIG. 6 is a schematic diagram of the flowchart of the DRX processing method in Embodiment 1. As shown in FIG. 6, the method may include:

Obtaining DRX configuration.

Specifically, it can be divided into step 601a and step 601b, and there is no sequence therebetween.

For the sidelink interface, the DRX configuration agreed in the protocol is adopted. That is, the DRX configuration corresponding to the combination of the source identity/destination identity of the sideink interface or the combination of the source identity/destination identity/cast type of the sidelink interface is a protocol agreement or pre-configured. If a specific target is the combination of the source identity/destination identity/cast type of the sidelink interface, the same or different DRX configurations may be assigned for unicast, broadcast and groupcast. In this way, no interaction is required between the sidelink transmitting terminal and the sidelink receiving terminal.

Specifically, the content of the DRX configuration at least includes the following information:

The DRX starting point;
The DRX cycle length;
The DRX activation period length or the DRX inactivity period length (which can be a specific time length or timer length);

Optionally, it can also carry the length of the related timer for maintaining DRX, for example:

HARQ RTT timer;
HARQ retransmission timer;
DRX inactivity timer.

Step 602: performing data transmission and/or reception according to the DRX configuration of the sidelink interface between sidelink terminals.

That is, according to the DRX configuration, during the DRX activation period, the sidelink transmitting terminal performs data transmission on the sidelink interface, and the sidelink receiving terminal performs data reception on the sidelink interface. During the DRX inactivation period, the sidelink transmitting terminal will not perform data transmission on the sidelink interface, and the sidelink receiving terminal will not perform data reception on the sidelink interface.

Example 2:

In this example, the DRX configuration corresponding to the specific target of the sidelink interface is determined based on the connection state of the Uu interface of the target node for determining the DRX configuration. The target node for determining the DRX configuration is in the RRC connected state.

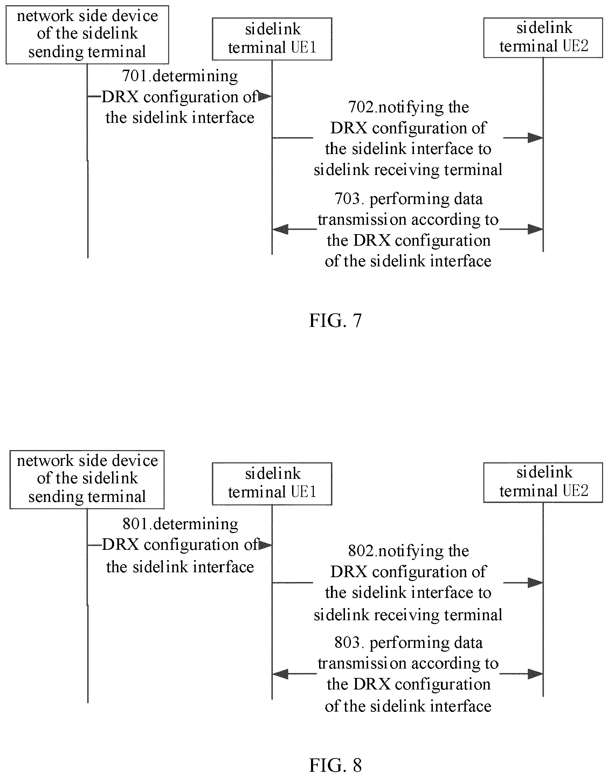

FIG. 7 is a schematic diagram of the flowchart of the DRX processing method in Embodiment 2. In FIG. 7, UE1 is the target node for determining the DRX configuration, and UE2 is the sidelink peer terminal of UE1. As shown in FIG.7, the method may include:
Step 701: notifying, by a network side device of the sidelink terminal UE1 the DRX configuration of the sidelink interface to UE1.

Specifically, UE1 is in the RRC connected state in the Uu interface, so UE1 obtains the DRX configuration information of the sidelink interface through dedicated signaling (RRC signaling, MAC signaling or physical layer signaling) from the network side device serving UE1, and determines the DRX configuration information as the DRX configuration of the sidelink interface.

The specific content of the DRX configuration information includes at least: a combination of the source identity/destination identity of the sidelink interface or the source identity/destination identity/cast type of the sidelink interface; and corresponding DRX configuration.

Specifically, for the unicast/multicast/broadcast of the sidelink interface, the content of the DRX configuration at least includes the following information:

The DRX starting point;
The DRX cycle length;
The DRX activation period length or the DRX inactivity period length (which can be a specific time length or timer length);

Optionally, it can also carry the length of the related timer for maintaining DRX, for example:

HARQ RTT timer;
HARQ retransmission timer;
DRX inactivity timer.

Step 702: notifying, by UE1, the DRX configuration of the sidelink interface to the sidelink peer terminal.

Specifically, for unicast of the sidelink interface, UE1 notifies the DRX configuration information of the sidelink interface to the sidelink peer terminal of UE1 through PC5-RRC signaling.

For groupcast of the sidelink interface, the UE1 notifies the DRX configuration of the sidelink interface to the sidelink receiving terminal in a groupcast mode.

For broadcast of the sidelink interface, the UE1 notifies the DRX configuration of the sidelink interface to the sidelink receiving terminal in a broadcast mode.

The specific notification modes of the DRX configuration may adopt the PC5-RRC signaling, PC5 MAC CE or PC5 PHY signaling. In addition, for groupcast and broadcast, UE1 needs to use a repeated transmission mode when transmitting the DRX configuration. The specific repeated transmission rules can be one or a combination of the following:

the repeated transmission mechanism used for each transmission of the DRX configuration, that is, repeated transmission for N times in a continuous time unit;
the repeated transmission of The DRX configuration according to a certain period T;

The value of the period T may be pre-configured or agreed in a protocol; the period T may also be the period of the DRX,

The DRX configuration is repeatedly transmitted on specific time/frequency domain resources; the specific time/frequency resources may be agreed in the protocol or preconfigured, or notified by the sidelink transmitting terminal to the sidelink receiving terminal.

Step 703: performing data transmission between the sidelink terminals according to the DRX configuration of the sidelink interface.

That is, according to the DRX configuration, during the DRX activation period, the sidelink transmitting terminal performs data transmission on the sidelink interface, and the sidelink receiving terminal performs data reception on the sidelink interface. During the DRX inactivation period, the sidelink transmitting terminal will not perform data transmission on the sidelink interface, and the sidelink receiving terminal will not perform data reception on the sidelink interface.

Example 3:

In this example, the DRX configuration corresponding to the specific target of the sidelink interface is determined based on the connection state of the Uu interface of the target node for determining the DRX configuration, and the target node for determining the DRX configuration is in the RRC IDLE/INACTIVE state.

FIG. 8 is a schematic diagram of the flowchart of the DRX processing method in Embodiment 3. In FIG. 8, UE1 is the sidelink terminal, and UE2 is the sidelink peer terminal of UE1. As shown in FIG.8, the method may include:
Step 801: notifying, by a network side device of the sidelink terminal UE1, the DRX configuration of the sidelink interface to UE1.

Specifically, the UE1 obtains the DRX configuration information of the sidelink interface through broadcasting (SIB) from the network side device serving UE1, and determines the DRX configuration information as the DRX configuration of the sidelink interface.

In order to assist the network side device serving UE1 to determine the DRX configuration of the sidelink interface, UE1 can also obtain assistant information from UE2 and report the assistant information to the network side device serving UE1 serves. The content of the specific assistant information may include, but not limited to: DRX configuration information proposed by the sidelink peer terminal.

The specific content of the DRX configuration information include at least: the combination of the source identity/destination identity of the sidelink interface or the source identity/destination identity/cast type of the sidelink interface; and the corresponding DRX configuration, or, the cast type of the sidelink interface and corresponding DRX configuration.

The content of the DRX configuration at least includes the following information:

The DRX starting point;
The DRX cycle length;
The DRX activation period length or the DRX inactivity period length (which can be a specific time length or timer length);

Optionally, it can also carry the length of the related timer for maintaining DRX, for example:

HARQ RTT timer;
HARQ retransmission timer;
DRX inactivity timer.

Step 802: notifying, by UE1, the DRX configuration of the sidelink interface to the sidelink peer terminal.

Specifically, for unicast of the sidelink interface, UE1 notifies the DRX configuration information of the sidelink interface to the sidelink peer terminal of UE1 through PC5-RRC signaling.

For groupcast of the sidelink interface, the UE1 notifies the DRX configuration of the sidelink interface to the sidelink receiving terminal in a goupcast mode.

For broadcast of the sidelink interface, the UE1 notifies the DRX configuration of the sidelink interface to the sidelink receiving terminal in a broadcast mode.

The specific notification modes of the DRX configuration may adopt the PC5-RRC signaling, PC5 MAC CE or PC5 PHY signaling. In addition, for groupcast and broadcast, UE1 needs to use a repeated transmission mode when transmitting the DRX configuration. The specific repeated transmission rules can be one or a combination of the following:

the repeated transmission mechanism used for each transmission of the DRX configuration, that is, repeated transmission for N times in a continuous time unit;
the repeated transmission of The DRX configuration according to a certain period T; the value of the period T may be pre-configured or agreed in a protocol, and the period T may also be the period of the DRX.

The DRX configuration is repeatedly transmitted on specific time/frequency domain resources; the specific time/frequency resources may be agreed in the protocol or preconfigured, or notified by the sidelink transmitting terminal to the sidelink receiving terminal.

Step 803: performing data transmission between the sidelink terminals according to the DRX configuration of the sidelink interface.

That is, according to the DRX configuration, during the DRX activation period, the sidelink transmitting terminal performs data transmission on the sidelink interface, and the sidelink receiving terminal performs data reception on the sidelink interface. During the DRX inactivation period, the sidelink transmitting terminal will not perform data transmission on the sidelink interface, and the sidelink receiving terminal will not perform data reception on the sidelink interface.

Example 4:

In this example, the DRX configuration corresponding to the specific target of the sidelink interface is determined based on the connection state of the Uu interface of the target node for determining the DRX configuration. The target node for determining the DRX configuration is in an off-network state.

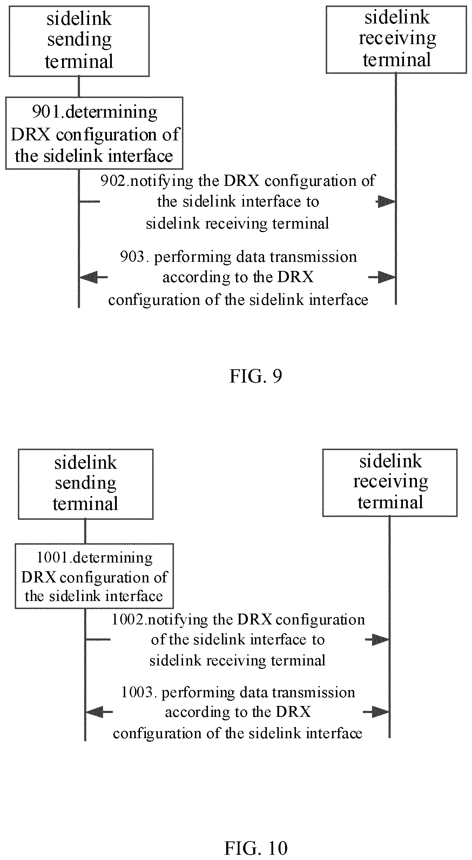

FIG. 9 is a schematic diagram of the flowchart of the DRX processing method in Embodiment 4. As shown in FIG. 9, the method may include:

Step 901: determining, by the sidelink terminal UE1, the DRX configuration of the sidelink interface according to the pre-configured information.

Specifically, UE1 obtains the DRX configuration information of the sidelink interface from the pre-configured information, and determines the DRX configuration information as the DRX configuration of the sidelink interface.

The specific content of the DRX configuration information includes at least: a combination of the source identity/destination identity of the sidelink interface or the source identity/destination identity/cast type of the sidelink interface; and corresponding DRX configuration.

Specifically, for the unicast/multicast/broadcast of the sidelink interface, the content of the DRX configuration at least includes the following information:

The DRX starting point;
The DRX cycle length;
The DRX activation period length or the DRX inactivity period length (which can be a specific time length or timer length);

Optionally, it can also carry the length of the related timer for maintaining DRX, for example:

HARQ RTT timer;
HARQ retransmission timer;
DRX inactivity timer.

Step 902: notifying, by UE1, the DRX configuration of the sidelink interface to the sidelink peer terminal.

Specifically, for unicast of the sidelink interface, UE1 notifies the DRX configuration information of the sidelink interface to the sidelink peer terminal of UE1 through PC5-RRC signaling.

For groupcast of the sidelink interface, the UE1 notifies the DRX configuration of the sidelink interface to the sidelink receiving terminal in a groupcast mode.

For broadcast of the sidelink interface, the UE1 notifies the DRX configuration of the sidelink interface to the sidelink receiving terminal in a broadcast mode.

The specific notification modes of the DRX configuration may adopt the PC5-RRC signaling, PC5 MAC CE or PC5 PHY signaling. In addition, for groupcast and broadcast, UE1 needs to use a repeated transmission mode when transmitting the DRX configuration. The specific repeated transmission rules can be one or a combination of the following:

the repeated transmission mechanism used for each transmission of the DRX configuration, that is, repeated transmission for N times in a continuous time unit;
the repeated transmission of The DRX configuration according to a certain period T; the value of the period T may be pre-configured or agreed in a protocol, and the period T may also be the period of the DRX.

The DRX configuration is repeatedly transmitted on specific time/frequency domain resources; the specific time/frequency resources may be agreed in the protocol or preconfigured, or notified by the sidelink transmitting terminal to the sidelink receiving terminal.

Step 903: performing data transmission between the sidelink terminals according to the DRX configuration of the sidelink interface.

That is, according to the DRX configuration, during the DRX activation period, the sidelink transmitting terminal performs data transmission on the sidelink interface, and the sidelink receiving terminal performs data reception on the sidelink interface. During the DRX inactivation period, the sidelink transmitting terminal will not perform data transmission on the sidelink interface, and the sidelink receiving terminal will not perform data reception on the sidelink interface.

Example 5:

In this example, the DRX configuration corresponding to the specific target of the sidelink interface is determined based on the implementation of the target node that determines the DRX configuration.

FIG. 10 is a schematic diagram of the flowchart of the DRX processing method in Embodiment 5. As shown in FIG. 10, the method may include:

Step 1001: determining, by the sidelink terminal UE1, the DRX configuration of the sidelink interface based on its own implementation.

The specific implementation is a terminal algorithm, which is not limited here, and can be selected according to implementation needs.

Optionally, in order to assist the implementation, the sidelink peer terminal of the sidelink terminal UE1 may send assistance information to the UE1. The content of the assistant information may be, but is not limited to: DRX configuration information proposed by the sidelink peer terminal.

The specific content of the DRX configuration information includes at least: a combination of the source identity/destination identity of the sidelink interface or the source identity/destination identity/cast type of the sidelink interface; and corresponding DRX configuration.

Specifically, for the unicast/multicast/broadcast of the sidelink interface, the content of the DRX configuration at least includes the following information:

The DRX starting point;
The DRX cycle length;
The DRX activation period length or the DRX inactivity period length (which can be a specific time length or timer length);

Optionally, it can also carry the length of the related timer for maintaining DRX, for example:

HARQ RTT timer;
HARQ retransmission timer;
DRX inactivity timer.

Step 1002: notifying, by UE1, the DRX configuration of the sidelink interface to the sidelink peer terminal.

Specifically, for unicast of the sidelink interface, UE1 notifies the DRX configuration information of the sidelink interface to the sidelink peer terminal of UE1 through PC5-RRC signaling.

For groupcast of the sidelink interface, the UE1 notifies the DRX configuration of the sidelink interface to the sidelink receiving terminal in a groupcast mode.

For broadcast of the sidelink interface, the UE1 notifies the DRX configuration of the sidelink interface to the sidelink receiving terminal in a broadcast mode.

The specific notification modes of the DRX configuration may adopt the PC5-RRC signaling, PC5 MAC CE or PC5 PHY signaling. In addition, for groupcast and broadcast, UE1 needs to use a repeated transmission mode when transmitting the DRX configuration. The specific repeated transmission rules can be one or a combination of the following:

the repeated transmission mechanism used for each transmission of the DRX configuration, that is, repeated transmission for N times in a continuous time unit;
the repeated transmission of The DRX configuration according to a certain period T; the value of the period T may be pre-configured or agreed in a protocol, and the period T may also be the period of the DRX.

The DRX configuration is repeatedly transmitted on specific time/frequency domain resources; the specific time/frequency resources may be agreed in the protocol or preconfigured, or notified by the sidelink transmitting terminal to the sidelink receiving terminal.

Step 1003: performing data transmission between the sidelink terminals according to the DRX configuration of the sidelink interface.

That is, according to the DRX configuration, during the DRX activation period, the sidelink transmitting terminal performs data transmission on the sidelink interface, and the sidelink receiving terminal performs data reception on the sidelink interface. During the DRX inactivation period, the sidelink transmitting terminal will not perform data transmission on the sidelink interface, and the sidelink receiving terminal will not perform data reception on the sidelink interface.

Based on the same concept, the embodiments of the present disclosure also provide a sidelink terminal, a DRX processing device, and a medium. Since the principle of these devices for solving problems is similar to the DRX processing method, the implementation of these devices can refer to the implementation of the method, and the repetitions are repeated.

When implementing the technical solutions provided by the embodiments of the present disclosure, it can be implemented as follows.

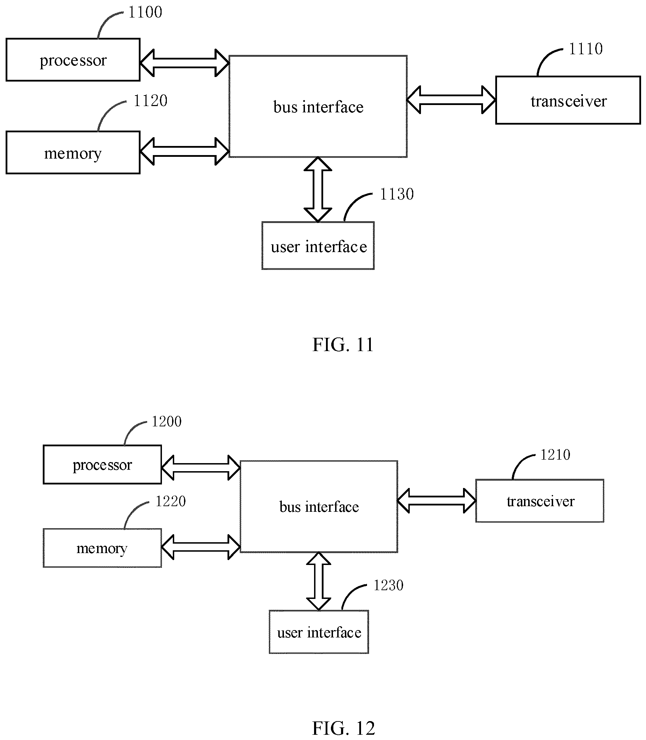

FIG. 11 is a schematic structural diagram of a target node for determining the DRX configuration. As shown in the figure, the user equipment includes:

A processor 1100, configured to read a program in a memory 1120 and perform the following processes:
determining sidelink DRX configuration corresponding to a specific target of the sidelink interface;

The specific target is a first combination of a sidelink interface source identity and a sidelink interface destination identity or a second combination of the sidelink interface source identity, the sidelink interface destination identity and a cast type of the sidelink interface;

a transceiver 1110, configured to receive and transmit data under the control of the processor 1100 .

In implementation, the cast types refer to: unicast, groupcast and broadcast; or unicast and multicast.

In the implementation, determining the sidelink DRX configuration corresponding to the specific target of the sidelink interface, including one of the following:

when the cast type of the sidelink interface is unicast, the target node for determining the DRX configuration is any terminal participating in the unicast communication of the sidelink interface;

When the cast type of the sidelink interface is broadcast, or groupcast or multicast, the target node for determining the DRX configuration is a transmitting terminal participating in the broadcast or groupcast or mulicast of the sidelink interface.

In implementation, the determining the sidelink DRX configuration corresponding to the specific target of the sidelink interface, including one of the following or a combination thereof:

For the sidelink interface, determining the DRX configuration corresponding to the specific target of the sidelink interface based on rules defined in protocol or based on preconfiguration; or,

Determining the DRX configuration corresponding to the specific target of the sidelink interface based on a connection state of a target node for determining the DRX configuration in the Uu interface; or,

Determining the DRX configuration corresponding to the specific target of the sidelink interface based on the implementation of the target node for determining the DRX configuration.

In the implementation, the DRX configuration corresponding to the specific target of the sidelink interface is determined based on the connection state of the Uu interface of the target node for determining the DRX configuration, including one of the following or a combination thereof:

If the connection state of the Uu interface of the target node for determining the DRX configuration is the RRC connected state, obtaining the DRX configuration information corresponding to the specific target of the sidelink interface from a network side device serving the target node through dedicated signaling, and determining the DRX configuration corresponding to the specific target of the sidelink interface according to the DRX configuration information;

If the connection state of the Uu interface of the target node for determining the DRX configuration is the RRC idle state or inactive state, obtaining the DRX configuration corresponding to the specific target of the sidelink interface from the network side device serving the target node through broadcast, and determining the DRX configuration corresponding to the specific target of the sidelink interface according to the DRX configuration information;

If the connection state of the Uu interface of the target node for determining the DRX configuration is the off-network state, obtaining the DRX configuration information corresponding to the specific target of the sidelink interface from the pre-configured information, and determining the DRX configuration corresponding to the specific target of the sidelink interface according to the DRX configuration information.

In a specific implementation, the DRX configuration information includes one or a combination of the following information:

Identification information of the specific target of the sidelink interface, and the DRX configuration corresponding to the specific target of the sidelink interface.

In implementation, when determining the DRX configuration corresponding to the specific target of the sidelink interface, the method further includes:

Receiving, by the target node for determining the DRX configuration, first assistant information from a sidelink peer terminal of the sidelink terminal, wherein the content of the first assistant information includes the DRX configuration corresponding to the specific target of the sidelink interface proposed by the sidelink peer terminal; and/or,

If the connection state of the Uu interface of the target node for determining the DRX configuration is the RRC connected state, transmitting, by the target node, second assistant information to a base station serving the target node, wherein the content of the second assistant information may be the DRX configuration corresponding to the specific target of the sidelink interface proposed by the target node or the sidelink peer terminal of the target node.

In the implementation, after determining the sidelink DRX configuration corresponding to the specific target of the sidelink interface, one of the following or a combination thereof is further included:

When the cast type of the sidelink interface is unicast communication, transmitting, by the target node for determining the DRX configuration, the DRX configuration information corresponding to the specific target of the sidelink interface to the sidelink peer terminal by a sidelink interface singling; or,

When the cast type of the sidelink interface is groupcast communication, transmitting, by the target node for determining the DRX configuration, the DRX configuration information corresponding to the specific target of the sidelink interface to the sidelink peer terminal by groupcasting; or,

When the cast type of the sidelink interface is broadcast communication, transmitting, by the target node for determining the DRX configuration, the DRX configuration information corresponding to the specific target of the sidelink interface to the sidelink peer terminal by broadcasting.

In the implementation, the sidelink interface signaling includes one or a combination of the following signaling: PC5-RRC signaling, PC5 MAC CE or PC5 PHY signaling.

In implementation, repeatedly transmitting the DRX configuration information of the specific target of the sidelink interface to the sidelink peer terminal of the sidelink terminal in one of the following or a combination thereof:

Repeated transmissions according to a preset number of times; or,
Repeated transmissions according to a preset period T; or,
Repeated transmissions on a specific time or frequency domain resource.

In the implementation, the preset period T is determined according to a pre-configuration or a protocol agreement, and according to a period of the DRX configuration.

In implementation, the specific time domain or frequency domain resource is determined according to pre-configuration or protocol agreement or negotiation between terminals in sidelink.

In implementation, the DRX configuration information of the sidelink interface includes one of the following information or a combination thereof:

A DRX start point, a DRX cycle length, a DRX active period length, a DRX inactive period length, a HARQ RTT timer, a HARQ retransmission timer, and a DRX inactive timer.

In FIG. 11, the bus architecture may include any number of interconnected buses and bridges, specifically various circuits of one or more processors represented by processor 1100 and memory represented by memory 1120 are linked together. The bus architecture may also link together various other circuits, such as peripherals, voltage regulators, and power management circuits, which are well known in the art and, therefore, will not be described further herein. The bus interface provides the interface. Transceiver 1110 may be a number of elements, including a transmitter and a receiver, a means for communicating with various other devices over a transmission medium. For different UEs, the user interface 1130 may also be an interface capable of externally connecting the required equipment, and the connected equipment includes but is not limited to a keypad, a display, a speaker, a microphone, a joystick, and the like.

The processor 1100 is responsible for managing the bus architecture and general processing, and the memory 1120 may store data used by the processor 1100 when performing operations.

An embodiment of the present disclosure provides a DRX processing device, including:

a determining module, configured to determine sidelink DRX configuration corresponding to a specific target of the sidelink interface;

The specific target is a first combination of a sidelink interface source identity and a sidelink interface destination identity or a second combination of the sidelink interface source identity, the sidelink interface destination identity and a cast type of the sidelink interface.

For the convenience of description, each part of the device described above is divided into various modules or units by function and described respectively. Of course, when implementing the present disclosure, the functions of each module or unit may be implemented in one or more software or hardware.

The implementation of the DRX processing method of the sidelink terminal on the DRX configuration side of the sidelink interface corresponding to the specific target of the sidelink interface may be referred for details.

FIG. 12 is a schematic structural diagram of the sidelink peer terminal of the target node for determining the DRX configuration. As shown in FIG. 12, the UE includes:

The processor 1200 is configured to read the program in the memory 1220 and perform the following processes:

receiving the DRX configuration information corresponding to the specific target of the sidelink interface, wherein the DRX configuration information corresponding to the specific target of the sidelink interface is determined by the sidelink peer terminal based on the specific target of the sidelink interface; the specific target is the first combination of the sidelink interface source identity and the sidelink interface destination identity or the second combination of the sidelink interface source identity, the sidelink interface destination identity and the cast type of the sidelink interface;

performing data transmission and/or reception according to the DRX configuration information;

The transceiver 1210 is used to receive and transmit data under the control of the processor 1200.

In implementation, the cast types of the sidelink interface are unicast, groupcast and broadcast; or, unicast and multicast.

In implementation, When the cast type of the sidelink interface is unicast communication, receiving the DRX configuration information corresponding to the specific target of the sidelink interface from the target node for determining the DRX configuration by the sidelink interface signaling; or,

When the cast type of the sidelink interface is groupcast communication, receiving the DRX configuration information corresponding to the specific target of the sidelink interface from the target node for determining the DRX configuration by groupcasting; or,

When the cast type of the sidelink interface is broadcast communication, receiving the DRX configuration information corresponding to the specific target of the sidelink interface from the target node for determining the DRX configuration by broadcasting;

Wherein, when the cast type of the sidelink interface is unicast communication, the target node for determining the DRX configuration is any terminal participating in the unicast communication of the sidelink interface; when the cast type of the sidelink interface is broadcast or groupcast or mulicast, the target node for determining the DRX configuration is a transmitting terminal participating in broadcast or groupcast or mulicast of the sidelink interface.

In the implementation, the sidelink interface signaling includes one or a combination of the following signaling: PC5-RRC signaling, PC5 MAC CE or PC5 PHY signaling.

In implementation, repeatedly receiving the DRX configuration information of the specific target of the sidelink interface according to one of the following modes or a combination thereof:

Repeated transmissions according to a preset number of times; or,
Repeated transmissions according to a preset period T; or,
Repeated transmissions on a specific time or frequency domain resource.

In implementation, the preset period T is determined according to a pre-configuration or a protocol agreement, and according to a period of the DRX configuration.

In implementation, the specific time domain or frequency domain resource is determined according to a pre-configuration or a protocol agreement, or negotiated between terminals in sidelink.

The implementation further includes:

Transmitting first assistant information to the target node for determining the DRX configuration, wherein the content of the first assistant information includes the DRX configuration corresponding to the specific target of the sidelink interface proposed by the sidelink peer terminal of the target node for determining the DRX configuration.

In implementation, the DRX configuration information of the sidelink interface includes one of the following information or a combination thereof:

A DRX start point, a DRX cycle length, a DRX active period length, a DRX inactive period length, a HARQ RTT timer, a HARQ retransmission timer, and a DRX inactive timer.

In FIG. 12, the bus architecture may include any number of interconnected buses and bridges, specifically various circuits of one or more processors represented by processor 1200 and memory represented by memory 1220 are linked together. The bus architecture may also link together various other circuits, such as peripherals, voltage regulators, and power management circuits, which are well known in the art and, therefore, will not be described further herein. The bus interface provides the interface. Transceiver 1210 may be a number of elements, including a transmitter and a receiver, a means for communicating with various other devices over a transmission medium. For different UEs, the user interface 1230 may also be an interface capable of externally connecting the required equipment, and the connected equipment includes but is not limited to a keypad, a display, a speaker, a microphone, a joystick, and the like.

The processor 1200 is responsible for managing the bus architecture and general processing, and the memory 1220 may store data used by the processor 1200 when performing operations.

An embodiment of the present disclosure provides a DRX processing device, including:

a receiving module, configured to receive the DRX configuration information corresponding to the specific target of the sidelink interface, wherein the DRX configuration information corresponding to the specific target of the sidelink interface is determined by the sidelink peer terminal based on the specific target of the sidelink interface; the specific target is the first combination of the sidelink interface source identity and the sidelink interface destination identity or the second combination of the sidelink interface source identity, the sidelink interface destination identity and the cast type of the sidelink interface;

A transmission module, configured to send and/or receive data according to the DRX configuration information.

For the convenience of description, each part of the device described above is divided into various modules or units by function and described respectively. Of course, when implementing the present disclosure, the functions of each module or unit may be implemented in one or more software or hardware.

The implementation of the DRX processing method of receiving the sidelink DRX configuration corresponding to the specific target of the sidelink interface is referred for detail.

An embodiment of the present disclosure provides a computer-readable storage medium, wherein the computer-readable storage medium stores a computer program for executing the above-mentioned DRX processing method.

The implementation of the DRX processing method of transmitting and/or receiving the DRX configuration side of the sidelink interface corresponding to the specific target of the sidelink interface on an opposite side of the DRX configuration side.

To sum up, a solution for using the DRX configuration of the sidelink interface is provided in the embodiments of the present disclosure. Through this solution, the DRX configuration available for the sidelink interface can be selected more flexibly, and the power saving is better.

As will be appreciated by one skilled in the art, embodiments of the present disclosure may be provided as a method, system, or computer program product. Accordingly, the present disclosure may take the form of an entirely hardware embodiment, an entirely software embodiment, or an embodiment combining software and hardware. Furthermore, the present disclosure may take the form of a computer program product embodied on one or more computer-readable storage medium having the computer readable program codes, the computer-readable storage medium includes but not limited to disk storage, optical storage, and the like.

The present disclosure is described with reference to flowchart illustrations and/or block diagrams of methods, apparatus (systems), and computer program products according to embodiments of the disclosure. It will be understood that each flow and/or block in the flowcharts and/or block diagrams, and combinations of flows and/or blocks in the flowcharts and/or block diagrams, can be implemented by computer program instructions. These computer program instructions may be provided to the processor of a general purpose computer, special purpose computer, embedded processor or other programmable data processing device to produce a machine such that the instructions executed by the processor of the computer or other programmable data processing device produce a device for implementing the functions specified in one or more of the flowcharts and/or one or more blocks of the block diagrams.

These computer program instructions may also be stored in a computer-readable memory capable of directing a computer or other programmable data processing apparatus to function in a particular manner, such that the instructions stored in the computer-readable memory produce an article including instruction device, the instruction device implements the functions specified in the flowcharts and/or the block diagrams.

These computer program instructions can also be loaded on a computer or other programmable data processing device to cause a series of operational steps to be performed on the computer or other programmable device to produce a computer-implemented process such that the instructions provide steps for implementing the functions specified in one or more of the flowcharts and/or one or more blocks of the block diagrams.

Those skilled in the art can clearly understand that, for the convenience and brevity of description, the specific working process of the above-described systems, devices and units may refer to the corresponding processes in the foregoing method embodiments, which will not be repeated here.

In the embodiments provided in present disclosure, it should be understood that the disclosed device and method may be implemented in other modes. For example, the apparatus embodiments described above are only illustrative. For example, the division of the units is only a logical function division. In actual implementation, there may be other division methods. For example, multiple units or components may be combined or be integrated into another system, or some features can be ignored, or not implemented. On the other hand, the shown or discussed mutual coupling or direct coupling or communication connection may be through some interfaces, indirect coupling or communication connection of devices or units may be in electrical, mechanical or other forms.

The units described as separate components may or may not be physically separated, and components displayed as units may or may not be physical units, that is, may be located in one place, or may be distributed to multiple network units. Some or all of the units may be selected according to actual needs to achieve the purpose of the solution in this embodiment.

In addition, each functional unit in each embodiment of the present disclosure may be integrated into one processing unit, or each unit may exist physically alone, or two or more units may be integrated into one unit.

The functions, if implemented in the form of software functional units and sold or used as independent products, may be stored in a computer-readable storage medium. Based on this understanding, the technical solutions of the present disclosure, in essence, or the parts that make contributions to the related art, can be embodied in the form of a software product, and the computer software product is stored in a storage medium and includes several instructions for making a computer (which may be a personal computer, a server, or a network device, etc.) to execute all or part of the steps of the methods described in the various embodiments of the present disclosure. The aforementioned storage medium includes: a U disk, a removable hard disk, a ROM, a RAM, a magnetic disk, or an optical disk and other mediums that can store program codes.

Those of ordinary skill in the art can understand that all or part of the processes in the methods of the above embodiments can be accomplished by controlling the relevant hardware through a computer program, and the program can be stored in a computer-readable storage medium, and when the program is executed, it may include the processes of the embodiments of the above-mentioned methods. The storage medium may be a magnetic disk, an optical disk, a read-only memory (ROM), or a random access memory (RAM) or the like.

It can be understood that the embodiments of the present disclosure may be implemented by hardware, software, firmware, middleware, microcode, or a combination thereof. For hardware implementation, modules, units and sub-units can be implemented in one or more Application Specific Integrated Circuits (ASIC), Digital Signal Processor (DSP), Digital Signal Processing Device (DSP Device, DSPD) ), Programmable Logic Device (PLD), Field-Programmable Gate Array (FPGA), general-purpose processor, controller, microcontroller, microprocessor, in other electronic units or combinations thereof.

For software implementation, the techniques described in the embodiments of the present disclosure may be implemented through modules (e.g., procedures, functions, etc.) that perform the functions described in the embodiments of the present disclosure. Software codes may be stored in memory and executed by a processor. The memory can be implemented in the processor or external to the processor.

It will be apparent to those skilled in the art that various modifications and variations can be made in the present disclosure without departing from the spirit and scope of the present disclosure. Thus, provided that these modifications and variations of the present disclosure fall within the scope of the claims of the present disclosure and their equivalents, the present disclosure is also intended to cover such modifications and variations.

**Claims**

1. A discontinuous reception (DRX) processing method, applied to a target node for determining DRX configuration, comprising:

   determining sidelink DRX configuration corresponding to a specific target of the sidelink interface;
   wherein the specific target is a first combination of a sidelink interface source identity and a sidelink interface destination identity, or or a second combination of the sidelink interface source identity, the sidelink interface destination identity and a cast type of the sidelink interface, or the specific target is the cast type of the sidelink interface.

2. The method according to claim 1, wherein the cast type of the sidelink interface is unicast, groupcast, broadcast; or, unicast and multicast.

3. The method according to claim 1, wherein the determining sidelink DRX configuration corresponding to a specific target of the sidelink interface includes one of the following:

   when the cast type of the sidelink interface is unicast, the target terminal being any terminal participating in unicast communication of the sidelink interface;
   when the cast type of the sidelink interface is broadcast or groupcast or multicast, the target terminal being a transmitting terminal participating in the broadcast or groupcast or multicast communication of the sidelink interface.

4. The method according to claim 3, wherein the determining sidelink DRX configuration corresponding to a specific target of the sidelink interface comprises one of the following or a combination thereof:

   for the sidelink interface, determining the DRX configuration corresponding to the specific target of the sidelink interface based on rules defined in protocol or based on preconfiguration; or,
   determining the DRX configuration corresponding to the specific target of the sidelink interface based on a connection state of Uu interface of the target terminal; or,
   determining the DRX configuration corresponding to the specific target of the sidelink interface based on implementation of the target terminal.

5. The method according to claim 3, wherein the determining the DRX configuration corresponding to the specific target of the sidelink interface based on a connection state of Uu interface of the target terminal comprises one of the following or a combination thereof:

if the connection state of the Uu interface of the target terminal is a RRC connected state, obtaining DRX configuration information corresponding to the specific target of the sidelink interface from a network side device serving the target node through dedicated signaling, and determining the DRX configuration corresponding to the specific target of the sidelink interface according to the DRX configuration information;

if the connection state of the Uu interface of the target terminal is a RRC idle state or inactive state, obtaining the DRX configuration information corresponding to the specific target of the sidelink interface from the network side device serving the target node through broadcast, and determining the DRX configuration corresponding to the specific target of the sidelink interface according to the DRX configuration information;

if the connection state of the Uu interface of the target terminal is an off-network state, obtaining the DRX configuration information corresponding to the specific target of the sidelink interface from pre-configured information, and determining the DRX configuration corresponding to the specific target of the sidelink interface according to the DRX configuration information.

6. The method according to claim 5, wherein the DRX configuration information includes one or a combination of the following:
identification information of the specific target of the sidelink interface, and the DRX configuration corresponding to the specific target of the sidelink interface.

7. The method according to claim 4, wherein when determining the DRX configuration corresponding to the specific target of the sidelink interface, the method further comprises:

receiving, by the target terminal, first assistant information from a sidelink peer terminal of the target node, wherein a content of the first assistant information includes the DRX configuration corresponding to the specific target of the sidelink interface proposed by the sidelink peer terminal; and/or,

if the connection state of the Uu interface of the target terminal is the RRC connected state, transmitting, by the target node, second assistant information to a base station serving the target node, wherein a content of the second assistant information includes the DRX configuration corresponding to the specific target of the sidelink interface proposed by the target node or the sidelink peer terminal of the target node.

8. The method according to claim 1, wherein after the determining the sidelink DRX configuration corresponding to the specific target of the sidelink interface, the method includes one of the following or a combination thereof:

when the cast type of the sidelink interface is unicast, transmitting, by the target terminal, the DRX configuration information corresponding to the specific target of the sidelink interface to the sidelink peer terminal by unicast singling of the sidelink interface; or,

when the cast type of the sidelink interface is groupcast, transmitting, by the target terminal, the DRX configuration information corresponding to the specific target of the sidelink interface to the sidelink peer terminal by a groupcast mode of the sidelink interface; or,

when the cast type of the sidelink interface is broadcast, transmitting, by the target terminal, the DRX configuration information corresponding to the specific target of the sidelink interface to the sidelink peer terminal by a broadcast mode of the sidelink interface.

9. The method according to claim 8, wherein the sidelink interface signaling includes one or a combination of the following signaling: PC5 Radio Resource Control (RRC) signaling, PC5 Media Access Control Control Element (MAC CE) or PC5 Physical Layer (PHY) signaling.

10. The method according to claim 8, wherein repeatedly transmitting the DRX configuration information of the specific target of the sidelink interface to the sidelink peer terminal in one of the following modes or a combination thereof:

repeated transmissions according to a preset number of times; or,
repeated transmissions according to a preset period T; or,
repeated transmissions on a specific time or frequency domain resource.

11. The method according to claim 10, wherein the preset period T is determined according to a pre-configuration or a protocol agreement, and according to a period of the DRX configuration.

12. The method according to claim 10, wherein the specific time domain or frequency domain resource is determined according to a pre-configuration or a protocol agreement, or negotiated between terminals in sidelink.

**13.** The method according to any one of claims 1 to 12, wherein the DRX configuration information of the specific target of the sidelink interface includes one of the following information or a combination thereof:
a DRX start point, a DRX cycle length, a DRX active period length, a DRX inactive period length, a Hybrid Automatic Repeat reQuest (HARQ) Round Trip Time (RTT) timer, a HARQ retransmission timer, and a DRX inactive timer.

**14.** A DRX processing method, applied to a sidelink peer terminal of a target node for determining DRX configuration, comprising:
receiving DRX configuration information corresponding to a specific target of a sidelink interface, wherein the DRX configuration information corresponding to the specific target of the sidelink interface is determined by the target terminal based on the specific target of the sidelink interface; the specific target is a first combination of a sidelink interface source identity and a sidelink interface destination identity, or a second combination of the sidelink interface source identity, the sidelink interface destination identity and a cast type of the sidelink interface, or the specific target is the cast type of the sidelink interface.

**15.** The method according to claim 14, wherein the cast type of the sidelink interface is unicast, groupcast, broadcast; or, unicast and multicast.

**16.** The method according to claim 14, wherein when the cast type of the sidelink interface is unicast, receiving the DRX configuration information corresponding to the specific target of the sidelink interface from the target terminal by unicast signaling of the sidelink interface; or,

when the cast type of the sidelink interface is groupcast, receiving the DRX configuration information corresponding to the specific target of the sidelink interface from the target terminal by a groupcast mode of the sidelink interface; or,
when the cast type of the sidelink interface is broadcast, receiving the DRX configuration information corresponding to the specific target of the sidelink interface from the target terminal by a broadcast mode of the sidelink interface;
wherein, when the cast type of the sidelink interface is unicast, the target terminal is any terminal participating in unicast communication of the sidelink interface; when the cast type of the sidelink interface is broadcast or groupcast or mulicast, the target terminal is a transmitting terminal participating in broadcast or groupcast or mulicast communication of the sidelink interface.

**17.** The method according to claim 16, wherein the sidelink interface signaling includes one or a combination of the following signaling: PC5-RRC signaling, PC5 MAC CE or PC5 PHY signaling.

**18.** The method according to claim 16, wherein repeatedly receiving the DRX configuration information of the specific target of the sidelink interface in one of the following modes or a combination thereof:

repeated transmissions according to a preset number of times; or,
repeated transmissions according to a preset period T; or,
repeated transmissions on a specific time or frequency domain resource.

**19.** The method according to claim 18, wherein the preset period T is determined according to a pre-configuration or a protocol agreement, and according to a period of the DRX configuration.

**20.** The method according to claim 18, wherein the specific time domain or frequency domain resource is determined according to a pre-configuration or a protocol agreement, or negotiated between terminals in sidelink.

**21.** The method according to claim 14, further comprising:
transmitting first assistant information to the target terminal, wherein a content of the first assistant information includes the DRX configuration corresponding to the specific target of the sidelink interface proposed by the sidelink peer terminal of the target terminal.

**22.** The method according to any one of claims 14 to 21, wherein the DRX configuration information of the specific target the sidelink interface includes one of the following information or a combination thereof:
a DRX start point, a DRX cycle length, a DRX active period length, a DRX inactive period length, a HARQ RTT timer, a HARQ retransmission timer, and a DRX inactive timer.

23. A sidelink terminal, being a target node for determining DRX configuration, comprising:
a processor, configured to read a program in a memory and perform the following processes:

determining sidelink DRX configuration corresponding to a specific target of the sidelink interface;
wherein the specific target is a first combination of a sidelink interface source identity and a sidelink interface destination identity, or a second combination of the sidelink interface source identity, the sidelink interface destination identity and a cast type of the sidelink interface, or the specific target is the cast type of the sidelink interface;
a transceiver, configured to receive and transmit data under the control of the processor.

24. The terminal according to claim 23, wherein the cast type of the sidelink interface is unicast, groupcast, broadcast; or, unicast and multicast.

25. The terminal according to claim 23, wherein the processor is further configured to read the program in the memory and perform one of the following processes:

when the cast type of the sidelink interface is unicast, the target terminal being any terminal participating in unicast communication of the sidelink interface;
when the cast type of the sidelink interface is broadcast or groupcast or mulicast, the target terminal being a transmitting terminal participating in the broadcast or groupcast or mulicast communication of the sidelink interface.

26. The terminal according to claim 25, wherein the processor is further configured to read the program in the memory and perform one or a combination of the following processes:

for the sidelink interface, determining the DRX configuration corresponding to the specific target of the sidelink interface based on rules defined in protocol or based on preconfiguration; or,
determining the DRX configuration corresponding to the specific target of the sidelink interface based on a connection state of Uu interface of the target terminal; or,
determining the DRX configuration corresponding to the specific target of the sidelink interface based on implementation of the target terminal.

27. The terminal according to claim 25, wherein the processor is further configured to read the program in the memory and perform one or a combination of the following processes:

if the connection state of the Uu interface of the target terminal is a RRC connected state, obtaining DRX configuration information corresponding to the specific target of the sidelink interface from a network side device serving the target node through dedicated signaling, and determining the DRX configuration corresponding to the specific target of the sidelink interface according to the DRX configuration information;
if the connection state of the Uu interface of the target terminal is a RRC idle state or inactive state, obtaining the DRX configuration information corresponding to the specific target of the sidelink interface from the network side device serving the target node through broadcast, and determining the DRX configuration corresponding to the specific target of the sidelink interface according to the DRX configuration information;
if the connection state of the Uu interface of the target terminal is an off-network state, obtaining the DRX configuration information corresponding to the specific target of the sidelink interface from pre-configured information, and determining the DRX configuration corresponding to the specific target of the sidelink interface according to the DRX configuration information.

28. The terminal according to claim 27, wherein the DRX configuration information includes one or a combination of the following:
identification information of the specific target of the sidelink interface, and the DRX configuration corresponding to the specific target of the sidelink interface.

29. The terminal according to claim 26, wherein when determining the DRX configuration corresponding to the specific target of the sidelink interface, the processor is further configured to read the program in the memory and perform the following processes:

receiving, by the target terminal, first assistant information from a sidelink peer terminal of the target node, wherein a content of the first assistant information includes the DRX configuration corresponding to the specific target of the sidelink interface proposed by the sidelink peer terminal; and/or,

if the connection state of the Uu interface of the target terminal is the RRC connected state, transmitting, by the target node, second assistant information to a base station serving the target node, wherein a content of the second assistant information includes the DRX configuration corresponding to the specific target of the sidelink interface proposed by the target node or the sidelink peer terminal of the target node.

30. The terminal according to claim 23, wherein after determining the sidelink DRX configuration corresponding to the specific target of the sidelink interface, the processor is further configured to read the program in the memory and perform one or a combination of the following processes:

when the cast type of the sidelink interface is unicast, transmitting, by the target terminal, the DRX configuration information corresponding to the specific target of the sidelink interface to the sidelink peer terminal by unicast singling of the sidelink interface; or,

when the cast type of the sidelink interface is groupcast, transmitting, by the target terminal, the DRX configuration information corresponding to the specific target of the sidelink interface to the sidelink peer terminal by a groupcast mode of the sidelink interface; or,

when the cast type of the sidelink interface is broadcast, transmitting, by the target terminal, the DRX configuration information corresponding to the specific target of the sidelink interface to the sidelink peer terminal by a broadcast mode of the sidelink interface.

31. The terminal according to claim 30, wherein the sidelink interface signaling comprises one or a combination of the following signaling: PC5-RRC signaling, PC5 MAC CE or PC5 PHY signaling.

32. The terminal according to claim 30, wherein the processor is further configured to read the program in the memory and perform the following processes: repeatedly transmitting the DRX configuration information of the specific target of the sidelink interface to the sidelink peer terminal in one of the following modes or a combination thereof:

repeated transmissions according to a preset number of times; or,

repeated transmissions according to a preset period T; or,

repeated transmissions on a specific time or frequency domain resource.

33. The terminal according to claim 32, wherein the preset period T is determined according to a pre-configuration or a protocol agreement or according to a period of the DRX configuration.

34. The terminal according to claim 32, wherein the specific time domain or frequency domain resource is determined according to a pre-configuration or a protocol agreement or negotiated between terminals in sidelink.

35. The terminal according to claim 23, wherein the DRX configuration information of the specific target of the sidelink interface includes one of the following information or a combination thereof:
a DRX start point, a DRX cycle length, a DRX active period length, a DRX inactive period length, a HARQ RTT timer, a HARQ retransmission timer, and a DRX inactive timer.

36. A DRX processing device, comprising:

a determining module, configured to determine sidelink DRX configuration corresponding to a specific target of a sidelink interface based on the specific target of the sidelink interface;

wherein the specific target is a first combination of a sidelink interface source identity and a sidelink interface destination identity, or a second combination of the sidelink interface source identity, the sidelink interface destination identity and a cast type of the sidelink interface, or the specific target is the cast type of the sidelink interface.

37. The DRX processing device according to claim 36, wherein the cast type of the sidelink interface is unicast, groupcast, broadcast; or, unicast and multicast.

38. The DRX processing device according to claim 36, wherein the determining sidelink DRX configuration corresponding to a specific target of the sidelink interface includes one of the following:

when the cast type of the sidelink interface is unicast, the target terminal being any terminal participating in unicast communication of the sidelink interface;

when the cast type of the sidelink interface is broadcast or groupcast or mulicast, the target terminal being a transmitting terminal participating in the broadcast or groupcast or mulicast communication of the sidelink interface.

39. The DRX processing device according to claim 38, wherein the determining sidelink DRX configuration corresponding to a specific target of the sidelink interface comprises one of the following or a combination thereof:

for the sidelink interface, determining the DRX configuration corresponding to the specific target of the sidelink interface based on rules defined in protocol or based on preconfiguration; or,

determining the DRX configuration corresponding to the specific target of the sidelink interface based on a connection state of Uu interface of the target terminal; or,

determining the DRX configuration corresponding to the specific target of the sidelink interface based on implementation of the target terminal.

40. The DRX processing device according to claim 38, wherein the determining the DRX configuration corresponding to the specific target of the sidelink interface based on a connection state of Uu interface of the target terminal comprises one of the following or a combination thereof:

if the connection state of the Uu interface of the target terminal is a RRC connected state, obtaining DRX configuration information corresponding to the specific target of the sidelink interface from a network side device serving the target node through dedicated signaling, and determining the DRX configuration corresponding to the specific target of the sidelink interface according to the DRX configuration information;

if the connection state of the Uu interface of the target terminal is a RRC idle state or inactive state, obtaining the DRX configuration information corresponding to the specific target of the sidelink interface from the network side device serving the target node through broadcast, and determining the DRX configuration corresponding to the specific target of the sidelink interface according to the DRX configuration information;

if the connection state of the Uu interface of the target terminal is an off-network state, obtaining the DRX configuration information corresponding to the specific target of the sidelink interface from pre-configured information, and determining the DRX configuration corresponding to the specific target of the sidelink interface according to the DRX configuration information.

41. The DRX processing device according to claim 40, wherein the DRX configuration information includes one or a combination of the following:
identification information of the specific target of the sidelink interface, and the DRX configuration corresponding to the specific target of the sidelink interface.

42. The DRX processing device according to claim 39, wherein when determining the DRX configuration corresponding to the specific target of the sidelink interface, the method further comprises:

receiving, by the target terminal, first assistant information from a sidelink peer terminal of the target node, wherein a content of the first assistant information includes the DRX configuration corresponding to the specific target of the sidelink interface proposed by the sidelink peer terminal; and/or,

if the connection state of the Uu interface of the target terminal is the RRC connected state, transmitting, by the target node, second assistant information to a base station serving the target node, wherein a content of the second assistant information includes the DRX configuration corresponding to the specific target of the sidelink interface proposed by the target node or the sidelink peer terminal of the target node.

43. The DRX processing device according to claim 36, wherein after the determining the sidelink DRX configuration corresponding to the specific target of the sidelink interface, the method includes one of the following or a combination thereof:

when the cast type of the sidelink interface is unicast, transmitting, by the target terminal, the DRX configuration information corresponding to the specific target of the sidelink interface to the sidelink peer terminal by unicast singling of the sidelink interface; or,

when the cast type of the sidelink interface is groupcast, transmitting, by the target terminal, the DRX configuration information corresponding to the specific target of the sidelink interface to the sidelink peer terminal by a groupcast mode of the sidelink interface; or,

when the cast type of the sidelink interface is broadcast, transmitting, by the target terminal, the DRX configuration information corresponding to the specific target of the sidelink interface to the sidelink peer terminal by a broadcast mode of the sidelink interface.

44. The DRX processing device according to claim 43, wherein the sidelink interface signaling includes one or a combination of the following signaling: PC5 Radio Resource Control (RRC) signaling, PC5 Media Access Control Control Element (MAC CE) or PC5 Physical Layer (PHY) signaling.

45. The DRX processing device according to claim 43, wherein repeatedly transmitting the DRX configuration information of the specific target of the sidelink interface to the sidelink peer terminal in one of the following modes or a combination thereof:

repeated transmissions according to a preset number of times; or,
repeated transmissions according to a preset period T; or,
repeated transmissions on a specific time or frequency domain resource.

46. The DRX processing device according to claim 45, wherein the preset period T is determined according to a preconfiguration or a protocol agreement, and according to a period of the DRX configuration.

47. The DRX processing device according to claim 45, wherein the specific time domain or frequency domain resource is determined according to a pre-configuration or a protocol agreement, or negotiated between terminals in sidelink.

48. The DRX processing device according to any one of claims 36 to 47, wherein the DRX configuration information of the specific target of the sidelink interface includes one of the following information or a combination thereof:
a DRX start point, a DRX cycle length, a DRX active period length, a DRX inactive period length, a Hybrid Automatic Repeat reQuest (HARQ) Round Trip Time (RTT) timer, a HARQ retransmission timer, and a DRX inactive timer.

49. A sidelink terminal, being a sidelink peer terminal of a target node for determining DRX configuration, comprising:
a processor, configured to read a program in a memory and perform the following processes:

receiving DRX configuration information corresponding to a specific target of a sidelink interface, wherein the DRX configuration information corresponding to the specific target of the sidelink interface is determined by the target terminal based on the specific target of the sidelink interface; the specific target is a first combination of a sidelink interface source identity and a sidelink interface destination identity, or a second combination of the sidelink interface source identity, the sidelink interface destination identity and a cast type of the sidelink interface, or the specific target is the cast type of the sidelink interface;
transmitting and/or receiving data according to the DRX configuration information;
a transceiver, configured to receive and transmit data under the control of the processor.

50. The terminal according to claim 49, wherein the cast type of the sidelink interface is unicast, groupcast, broadcast; or, unicast and multicast.

51. The terminal according to claim 49, wherein the processor is further configured to read the program in the memory and perform the following processes:

when the cast type of the sidelink interface is unicast, receiving the DRX configuration information corresponding to the specific target of the sidelink interface from the target terminal by unicast signaling of the sidelink interface; or,
when the cast type of the sidelink interface is groupcast, receiving the DRX configuration information corresponding to the specific target of the sidelink interface from the target terminal by a grouopcast mode of the sidelink interface; or,
when the cast type of the sidelink interface is broadcast, receiving the DRX configuration information corresponding to the specific target of the sidelink interface from the target terminal by a broadcast mode of the sidelink interface;
wherein, when the cast type of the sidelink interface is unicast, the target terminal is any terminal participating in unicast communication of the sidelink interface; when the cast type of the sidelink interface is broadcast or groupcast or mulicast, the target terminal is a transmitting terminal participating in broadcast or groupcast or mulicast communication of the sidelink interface.

52. The terminal according to claim 51, wherein the sidelink interface signaling includes one or a combination of the following signaling: PC5-RRC signaling, PC5 MAC CE or PC5 PHY signaling.

53. The terminal according to claim 51, wherein repeatedly receiving the DRX configuration information of the specific target of the sidelink interface in one of the following modes or a combination thereof:

repeated transmissions according to a preset number of times; or,
repeated transmissions according to a preset period T; or,
repeated transmissions on a specific time or frequency domain resource.

54. The terminal according to claim 53, wherein the preset period T is determined according to a pre-configuration or a protocol agreement, and according to a period of the DRX configuration.

55. The terminal according to claim 53, wherein the specific time domain or frequency domain resource is determined according to a pre-configuration or a protocol agreement, or negotiated between terminals in sidelink.

56. The terminal according to claim 49, wherein the processor is further configured to read the program in the memory and perform the following processes:
transmitting first assistant information to the target terminal, wherein a content of the first assistant information includes the DRX configuration corresponding to the specific target of the sidelink interface proposed by the sidelink peer terminal of the target terminal.

57. The terminal according to any one of claims 49 to 56, wherein the DRX configuration information of the specific target the sidelink interface includes one of the following information or a combination thereof:
a DRX start point, a DRX cycle length, a DRX active period length, a DRX inactive period length, a HARQ RTT timer, a HARQ retransmission timer, and a DRX inactive timer.

58. A DRX processing device, comprising:

a receiving module, configured to receive DRX configuration information corresponding to a specific target of a sidelink interface, wherein the DRX configuration information corresponding to the specific target of the sidelink interface is determined by the target terminal based on the specific target of the sidelink interface; the specific target is a first combination of a sidelink interface source identity and a sidelink interface destination identity, or a second combination of the sidelink interface source identity, the sidelink interface destination identity and a cast type of the sidelink interface, or the specific target is the cast type of the sidelink interface;
a transmission module, configured to send and/or receive data according to the DRX configuration information.

59. The DRX processing device according to claim 58, wherein the cast type of the sidelink interface is unicast, groupcast, broadcast; or, unicast and multicast.

60. The DRX processing device according to claim 58, wherein when the cast type of the sidelink interface is unicast, receiving the DRX configuration information corresponding to the specific target of the sidelink interface from the target terminal by unicast signaling of the sidelink interface; or,

when the cast type of the sidelink interface is groupcast, receiving the DRX configuration information corresponding to the specific target of the sidelink interface from the target terminal by a groupcast mode of the sidelink interface; or,
when the cast type of the sidelink interface is broadcast, receiving the DRX configuration information corresponding to the specific target of the sidelink interface from the target terminal by a broadcast mode of the sidelink interface;
wherein, when the cast type of the sidelink interface is unicast, the target terminal is any terminal participating in unicast communication of the sidelink interface; when the cast type of the sidelink interface is broadcast or groupcast or mulicast, the target terminal is a transmitting terminal participating in broadcast or groupcast or mulicast communication of the sidelink interface.

61. The DRX processing device according to claim 60, wherein the sidelink interface signaling includes one or a combination of the following signaling: PC5-RRC signaling, PC5 MAC CE or PC5 PHY signaling.

62. The DRX processing device according to claim 60, wherein repeatedly receiving the DRX configuration information of the specific target of the sidelink interface in one of the following modes or a combination thereof:

repeated transmissions according to a preset number of times; or,
repeated transmissions according to a preset period T; or,
repeated transmissions on a specific time or frequency domain resource.

63. The DRX processing device according to claim 62, wherein the preset period T is determined according to a pre-configuration or a protocol agreement, and according to a period of the DRX configuration.

64. The DRX processing device according to claim 62, wherein the specific time domain or frequency domain resource is determined according to a pre-configuration or a protocol agreement, or negotiated between terminals in sidelink.

65. The DRX processing device according to claim 58, further configured to:
send first assistant information to the target terminal, wherein a content of the first assistant information includes the DRX configuration corresponding to the specific target of the sidelink interface proposed by the sidelink peer terminal of the target terminal.

66. The DRX processing device according to any one of claims 58 to 65, wherein the DRX configuration information of the specific target the sidelink interface includes one of the following information or a combination thereof:
a DRX start point, a DRX cycle length, a DRX active period length, a DRX inactive period length, a HARQ RTT timer, a HARQ retransmission timer, and a DRX inactive timer.

67. A computer-readable storage medium storing a computer program, wherein the computer program is executed by a processor to implement the steps of the method according to any one of claims 1 to 22.

FIG. 1

FIG. 2

FIG. 3

determining DRX configuration of a sidelink interface corresponding to a specific target of the sidelink interface based on the specific target of the sidelink interface; the specific target is a first combination of a sidelink interface source address and a sidelink interface destination address or a second combination of the sidelink interface source address, the sidelink interface destination address and a transmission type of the sidelink interface. The transmission types refer to: unicast, multicast and broadcast; or unicast and multicast

401

FIG. 4

receiving the DRX configuration information corresponding to the
specific target of the sidelink interface, wherein the DRX configuration
information corresponding to the specific target of the sidelink interface
is determined by the sidelink opposite terminal based on the specific
target of the sidelink interface; the specific target is the first combination
of the sidelink interface source address and the sidelink interface
destination address or the second combination of the sidelink interface
source address, the sidelink interface destination address and the
transmission type of the sidelink interface

501

FIG. 5

| Sidelink UE1 | | Sidelink UE2 |
|---|---|---|

601a. Obtaining
DRX configuration
of the sidelink
interface

601b. Obtaining
DRX configuration
of the sidelink
interface

602. performing data
transmission
according to the
DRX configuration

FIG. 6

```
┌──────────────────┐   ┌──────────────┐                    ┌──────────────┐
│ network side device │   │   sidelink   │                    │   sidelink   │
│  of the sidelink  │   │ terminal UE1 │                    │ terminal UE2 │
│  sending terminal │   └──────────────┘                    └──────────────┘
└──────────────────┘
```

701.determining
—DRX configuration of▶
the sidelink interface

702.notifying the
DRX configuration of
the sidelink interface to
sidelink receiving terminal

703. performing data
transmission according to
the DRX configuration
of the sidelink interface

FIG. 7

```
┌──────────────────┐   ┌──────────────┐                    ┌──────────────┐
│ network side device │   │   sidelink   │                    │   sidelink   │
│  of the sidelink  │   │ terminal UE1 │                    │ terminal UE2 │
│  sending terminal │   └──────────────┘                    └──────────────┘
└──────────────────┘
```

801.determining
—DRX configuration of▶
the sidelink interface

802.notifying the
DRX configuration of
the sidelink interface to
sidelink receiving terminal

803. performing data
transmission according to
the DRX configuration
of the sidelink interface

FIG. 8

| sidelink sending terminal | | sidelink receiving terminal |
|---|---|---|

901.determining DRX configuration of the sidelink interface

902.notifying the DRX configuration of the sidelink interface to sidelink receiving terminal

903. performing data transmission according to the DRX configuration of the sidelink interface

FIG. 9

| sidelink sending terminal | | sidelink receiving terminal |
|---|---|---|

1001.determining DRX configuration of the sidelink interface

1002.notifying the DRX configuration of the sidelink interface to sidelink receiving terminal

1003. performing data transmission according to the DRX configuration of the sidelink interface

FIG. 10

1100

processor

1120

memory

bus interface

1110

transceiver

1130

user interface

FIG. 11

1200

processor

1220

memory

bus interface

1210

transceiver

1230

user interface

FIG. 12

## INTERNATIONAL SEARCH REPORT

| | International application No. |
|---|---|
| | **PCT/CN2021/074336** |

**A. CLASSIFICATION OF SUBJECT MATTER**

H04W 52/02(2009.01)i

According to International Patent Classification (IPC) or to both national classification and IPC

**B. FIELDS SEARCHED**

Minimum documentation searched (classification system followed by classification symbols)

H04W; H04B; H04L

Documentation searched other than minimum documentation to the extent that such documents are included in the fields searched

Electronic data base consulted during the international search (name of data base and, where practicable, search terms used)

CNABS, CNKI, VEN, CNTXT, USTXT, 3GPP: 非连续接收, 设备至设备, 配置, 接口, 目标, 地址, 标识, 直接通信, 目的, 类型, 传输, 类别, 辅助, 附加, 建议, 节能, 省电, 节电, DRX, DISCONTINOUS, RECEPTION, RECEIVING, UE, D2D, SETTING, CONFIG+, POWER, SAVING, INTERFACE, PORT, OBJECTIVE, DESTINATION, SOURCE, ADDRESS, IDENTIFIER, ID, TYPE, TRANSMISSION, BROADCAST, MULTICAST, AUXILIARY, ASSISTANT, INFORMATION, ADDITIONAL, ADVICE, ENERGY

**C. DOCUMENTS CONSIDERED TO BE RELEVANT**

| Category* | Citation of document, with indication, where appropriate, of the relevant passages | Relevant to claim No. |
|---|---|---|
| X | CN 107241786 A (CHINA ACADEMY OF TELECOMMUNICATIONS TECHNOLOGY) 10 October 2017 (2017-10-10) description paragraphs 2-11, 153-541, figures 1-17 | 1-4, 8-20, 22-26, 30-39, 43-55, 57-64, 66-67 |
| X | CN 107241678 A (CHINA ACADEMY OF TELECOMMUNICATIONS TECHNOLOGY) 10 October 2017 (2017-10-10) description, paragraphs 205-749, figures 1-17 | 1-4, 8-20, 22-26, 30-39, 43-55, 57-64, 66-67 |
| X | CN 107306423 A (CHINA ACADEMY OF TELECOMMUNICATIONS TECHNOLOGY) 31 October 2017 (2017-10-31) description, paragraphs 189-501, figures 1-10 | 1-4, 8-20, 22-26, 30-39, 43-55, 57-64, 66-67 |
| X | WO 2015176251 A1 (HUAWEI TECHNOLOGIES CO., LTD.) 26 November 2015 (2015-11-26) description, pages 9-22, figures 1-17 | 1-4, 8-20, 22-26, 30-39, 43-55, 57-64, 66-67 |
| A | CN 104521157 A (LG ELECTRONICS INC.) 15 April 2015 (2015-04-15) entire document | 1-67 |

☑ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 February 2021** | **02 April 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2021/074336**

**C.** **DOCUMENTS CONSIDERED TO BE RELEVANT**

| Category* | Citation of document, with indication, where appropriate, of the relevant passages | Relevant to claim No. |
|---|---|---|
| A | CN 109479189 A (SAMSUNG ELECTRONICS CO., LTD.) 15 March 2019 (2019-03-15) entire document | 1-67 |

INTERNATIONAL SEARCH REPORT
Information on patent family members

International application No.

**PCT/CN2021/074336**

| Patent document cited in search report | | | Publication date (day/month/year) | Patent family member(s) | | | Publication date (day/month/year) |
|---|---|---|---|---|---|---|---|
| CN | 107241786 | A | 10 October 2017 | CN | 107241786 | B | 02 October 2020 |
| | | | | US | 2019090198 | A1 | 21 March 2019 |
| | | | | EP | 3442276 | A1 | 13 February 2019 |
| | | | | WO | 2017166961 | A1 | 05 October 2017 |
| | | | | EP | 3442276 | A4 | 17 April 2019 |
| CN | 107241678 | A | 10 October 2017 | WO | 2017167073 | A1 | 05 October 2017 |
| | | | | CN | 107241678 | B | 06 August 2019 |
| | | | | US | 2019116626 | A1 | 18 April 2019 |
| | | | | EP | 3451709 | A1 | 06 March 2019 |
| | | | | EP | 3451709 | A4 | 10 April 2019 |
| CN | 107306423 | A | 31 October 2017 | CN | 107306423 | B | 17 September 2019 |
| | | | | WO | 2017185867 | A1 | 02 November 2017 |
| WO | 2015176251 | A1 | 26 November 2015 | CN | 105379406 | A | 02 March 2016 |
| | | | | CN | 105379406 | B | 06 December 2019 |
| CN | 104521157 | A | 15 April 2015 | EP | 2875693 | B1 | 12 June 2019 |
| | | | | EP | 2875660 | B1 | 08 May 2019 |
| | | | | US | 2017339689 | A1 | 23 November 2017 |
| | | | | JP | 2018038072 | A | 08 March 2018 |
| | | | | US | 2015156743 | A1 | 04 June 2015 |
| | | | | EP | 3547788 | A1 | 02 October 2019 |
| | | | | EP | 2875593 | B1 | 01 July 2020 |
| | | | | EP | 2875666 | A1 | 27 May 2015 |
| | | | | US | 10327251 | B2 | 18 June 2019 |
| | | | | EP | 2875691 | B1 | 16 October 2019 |
| | | | | US | 9942905 | B2 | 10 April 2018 |
| | | | | US | 2019261348 | A1 | 22 August 2019 |
| | | | | JP | 2015526983 | A | 10 September 2015 |
| | | | | CN | 104584669 | A | 29 April 2015 |
| | | | | US | 9357560 | B2 | 31 May 2016 |
| | | | | EP | 2875693 | A4 | 30 March 2016 |
| | | | | EP | 2875660 | A4 | 30 March 2016 |
| | | | | CN | 104584669 | B | 05 April 2019 |
| | | | | US | 2015296535 | A1 | 15 October 2015 |
| | | | | JP | 6240189 | B2 | 29 November 2017 |
| | | | | US | 9756643 | B2 | 05 September 2017 |
| | | | | US | 9648638 | B2 | 09 May 2017 |
| | | | | US | 9629178 | B2 | 18 April 2017 |
| | | | | EP | 2875593 | A4 | 30 March 2016 |
| | | | | JP | 6542327 | B2 | 10 July 2019 |
| | | | | CN | 104521157 | B | 15 February 2019 |
| | | | | CN | 104620661 | B | 02 October 2018 |
| | | | | US | 2015208452 | A1 | 23 July 2015 |
| | | | | EP | 3547788 | B1 | 16 September 2020 |
| | | | | CN | 104620661 | A | 13 May 2015 |
| | | | | EP | 2875666 | B1 | 30 January 2019 |
| | | | | EP | 2875691 | A4 | 13 July 2016 |
| | | | | US | 2015257196 | A1 | 10 September 2015 |
| | | | | WO | 2014014327 | A1 | 23 January 2014 |
| | | | | EP | 2875660 | A1 | 27 May 2015 |
| | | | | CN | 104541530 | A | 22 April 2015 |

Form PCT/ISA/210 (patent family annex) (January 2015)

**INTERNATIONAL SEARCH REPORT**
Information on patent family members

International application No.

**PCT/CN2021/074336**

| Patent document cited in search report | | | Publication date (day/month/year) | Patent family member(s) | | | Publication date (day/month/year) |
|---|---|---|---|---|---|---|---|
| | | | | EP | 2875693 | A1 | 27 May 2015 |
| | | | | US | 9585163 | B2 | 28 February 2017 |
| | | | | JP | 2015526982 | A | 10 September 2015 |
| | | | | WO | 2014014326 | A1 | 23 January 2014 |
| | | | | US | 2017070986 | A1 | 09 March 2017 |
| | | | | EP | 2875593 | A1 | 27 May 2015 |
| | | | | WO | 2014014325 | A1 | 23 January 2014 |
| | | | | JP | 6141977 | B2 | 07 June 2017 |
| | | | | EP | 2875691 | A1 | 27 May 2015 |
| | | | | US | 10057905 | B2 | 21 August 2018 |
| | | | | US | 10681704 | B2 | 09 June 2020 |
| | | | | WO | 2014014324 | A1 | 23 January 2014 |
| | | | | US | 9668278 | B2 | 30 May 2017 |
| CN | 109479189 | A | 15 March 2019 | DE | 112017003646 | T5 | 04 April 2019 |
| | | | | WO | 2018016882 | A1 | 25 January 2018 |

Form PCT/ISA/210 (patent family annex) (January 2015)

**EP 4 106 417 A1**

## REFERENCES CITED IN THE DESCRIPTION

**Patent documents cited in the description**

- CN 202010085307